# FASCICULE DE BREVET EUROPEEN

(11) **EP 2 118 552 B1**
(45) Date de publication et mention de la délivrance du brevet: **24.04.2013**
(21) Numéro de dépôt: 08762034.0
(22) Date de dépôt: 04.02.2008
(51) Int. Cl.: F16L 55/136, E21B 33/12, E21B 33/129

(54) **MANDRIN ET PROCEDE DE MISE EN PLACE ASSOCIE**
ROHRLEITUNGSVERSCHLUSS UND VERFAHREN ZUM EINBRINGEN DESSELBEN
MANDREL AND ASSOCIATED POSITIONING METHOD

(30) Priorité: 05.02.2007 FR 0753057
(43) Date de publication de la demande: 18.11.2009
(73) Titulaire: Geoservices Equipements, 95700 Roissy en France (FR)
(72) Inventeur: MILLET, François, F-92160 Antony (FR); FOUCHER, Pierre-Arnaud, F-78300 Poissy (FR); HELDERLE, Paul, F-75015 Paris (FR)
(74) Mandataire: Domenego, Bertrand
(86) Numéro de dépôt international: PCT/FR2008/050175
(87) Numéro de publication internationale: WO 2008/104675

(56) Documents cités:
- WO-A-2005/106189
- GB-A- 2 337 064
- US-A- 2 230 712
- US-B2- 6 695 051

## Description

La présente invention concerne un mandrin destiné à être introduit dans un conduit de circulation d'un fluide, du type comprenant :
- un corps présentant un axe longitudinal X-X' ;
- un élément annulaire d'étanchéité expansible radialement, comprenant un ensemble de centrage et un ensemble d'obturation de l'ensemble de centrage, chaque ensemble étant déployable radialement par rapport au corps entre une configuration contractée et une configuration dilatée, l'élément annulaire d'étanchéité définissant une surface périphérique continue d'application sur le conduit et une surface périphérique continue d'application sur le corps lorsque l'ensemble de centrage et l'ensemble d'obturation occupent leurs configurations dilatées ;
- un élément d'ancrage expansible radialement, espacé longitudinalement de l'ensemble annulaire d'étanchéité, l'élément d'ancrage étant déplaçable entre un état rétracté et un état déployé dans lequel il délimite au moins un conduit axial;
- des moyens de séquençage aptes à déployer radialement l'ensemble de centrage et l'élément d'ancrage avant l'ensemble d'obturation.

On connaît un mandrin du type précité, commercialisé par la société BA-KER HUGUES sous le nom NPR™. Ce mandrin comprend un élément annulaire d'étanchéité et un élément d'ancrage constitué par des chiens d'ancrage déployables. L'élément annulaire d'étanchéité comprend trois garnitures annulaires déformables décalées axialement. Une première garniture est déployable radialement en même temps ou après les chiens d'ancrage pour assurer le centrage du mandrin. Les deuxième et troisième garnitures annulaires sont ensuite déployables radialement pour réaliser l'étanchéité autour du mandrin, entre le corps du mandrin et le conduit. Un autre mandrin du type précité est décrit dans le document US 6.695.051.

Un tel mandrin ne donne pas entière satisfaction. En effet, le déploiement de la première garniture en même temps que les chiens d'ancrage obturent sensiblement totalement l'espace annulaire entre le mandrin et le conduit. Lorsque du fluide sous pression circule dans le conduit, la première garniture favorise donc l'apparition d'un « effet piston » qui tend à déplacer axialement le mandrin dans le conduit. Un tel déplacement axial rend le positionnement précis du mandrin difficile, peu fiable et surtout dangereux. En effet il existe un risque d'éjection du mandrin entraînant une détérioration de la garniture, un positionnement imprécis, voire un incident opératoire.

Un but de l'invention est donc d'obtenir un mandrin qui peut être fixé de manière étanche dans un puits de manière sûre, fiable, simple et précise, même lorsqu'un fluide sous pression circule autour du mandrin dans le puits.

A cet effet, l'invention a pour objet un mandrin du type précité, caractérisé en ce que l'ensemble de centrage présente une configuration au moins partiellement dilatée dans laquelle il définit au moins un passage axial s'étendant à travers l'élément annulaire d'étanchéité, l'ensemble d'obturation obturant radialement le ou chaque passage axial lors de son déploiement depuis sa configuration contractée vers sa configuration dilatée, l'élément d'ancrage restant sensiblement dans son état déployé lors du déploiement radial de l'ensemble d'obturation.

Le mandrin selon l'invention peut comprendre l'une ou plusieurs des caractéristiques suivantes, prises ou isolément ou suivant toute(s) combinaison(s) techniquement possible(s) :
- le corps délimite une première surface d'expansion radiale de l'ensemble de centrage et de l'ensemble d'obturation, et une deuxième surface d'expansion radiale de l'ensemble d'ancrage mobile longitudinalement par rapport à la première surface d'expansion radiale entre :
- une position éloignée dans laquelle l'ensemble de centrage et l'ensemble d'obturation occupent leur configuration contractée, l'élément d'ancrage occupant son état rétracté ;
- une position intermédiaire de centrage, dans laquelle l'ensemble de centrage occupe sa configuration au moins partiellement dilatée, et l'ensemble d'ancrage occupe un état au moins partiellement déployé, le ou chaque passage axial et le ou chaque conduit axial étant au moins partiellement dégagés, et
- une position rapprochée d'obturation, dans laquelle l'ensemble d'obturation occupe sa configuration dilatée pour obturer le ou chaque passage axial défini par l'ensemble de centrage ;
- le corps comporte :
- un manchon portant l'une de la première surface d'expansion radiale et de la deuxième surface d'expansion radiale ;
- un tube monté coulissant dans le manchon portant l'autre de la première surface d'expansion radiale et de la deuxième surface d'expansion radiale ;
l'ensemble de centrage, l'ensemble d'étanchéité et l'élément d'ancrage étant montés coulissants autour du corps, sans interposition d'un organe de liaison frangible entre chacune de ces pièces ;
- la première surface radiale définit un premier chemin de came pour l'expansion radiale de l'ensemble de centrage et un deuxième chemin de came pour l'expansion radiale de l'ensemble d'obturation, de profil distinct du premier chemin de came, le premier chemin de came comprenant une marche d'expansion radiale pour faire passer l'ensemble de centrage de sa configuration contractée vers sa configuration au moins partiellement dilatée, et une surface conique pour provoquer l'expansion radiale de l'ensemble de centrage vers sa configuration dilatée ;
- la première surface d'expansion radiale, la deuxième surface d'expansion radiale, l'ensemble annulaire d'étanchéité, l'ensemble d'ancrage et les moyens de séquençage sont démontables de manière réversible par rapport au corps entre :
- une configuration fonctionnelle supérieure dans laquelle la première surface d'expansion radiale et l'ensemble annulaire d'étanchéité sont situés longitudinalement au-dessus de la deuxième surface d'expansion radiale et de l'ensemble d'ancrage ; et
- une configuration fonctionnelle inférieure dans laquelle la première surface d'expansion radiale et l'ensemble annulaire d'étanchéité sont situés longitudinalement au-dessous de la deuxième surface d'expansion radiale et de l'ensemble d'ancrage ;
- les moyens de séquençage comprennent un premier organe de sollicitation élastique de l'élément d'ancrage vers son état rétracté, et un deuxième organe de sollicitation élastique de l'ensemble de centrage et de l'ensemble d'obturation vers leur configuration contractée,
et le premier organe de sollicitation et le deuxième organe de sollicitation sont initialement précontraints et interposés en série entre la première surface d'expansion radiale et la deuxième surface d'expansion radiale, le premier organe de sollicitation présentant une raideur et/ou une précontrainte initiale différente de celle du deuxième organe de sollicitation, pour obtenir un déploiement séquentiel et continu de l'ensemble de centrage, de l'élément d'ancrage et de l'ensemble d'obturation ;
- il comprend des moyens de blocage du déplacement de la première surface d'expansion radiale à l'écart de la deuxième surface d'expansion radiale, ces moyens de blocage étant activables uniquement au-delà de la position intermédiaire de centrage ;
- les moyens de blocage comprennent :
- une première surface dentée solidaire d'un premier organe portant la première surface d'expansion radiale ;
- une deuxième surface dentée de pas P, solidaire d'un deuxième organe portant la deuxième surface d'expansion radiale ;
- au moins N bagues dentées, N étant supérieur à 1, interposées entre la première surface dentée et la deuxième surface dentée, les bagues présentant des dentures de pas décalés longitudinalement de P/N pour engager la première surface dentée avec la deuxième surface dentée par l'intermédiaire successivement et cycliquement de chacune des N bagues lors du déplacement de la première surface d'expansion radiale vers la deuxième surface d'expansion radiale ;
- il comprend un support de traction fixé sur le tube de manoeuvre par l'intermédiaire d'un organe périphérique frangible, le support de traction étant séparable du tube de manoeuvre par poinçonnage de l'organe périphérique frangible le long d'une périphérie du support de traction, et l'organe périphérique frangible est une rondelle tarée d'épaisseur constante pour être rompue sous l'effet d'une force longitudinale de séparation prédéterminée entre le support de traction et le tube de manoeuvre ;
- l'ensemble de centrage comprend une pluralité de blocs de centrage espacés latéralement les uns des autres autour de l'axe longitudinal X-X' dans la configuration dilatée de l'ensemble de centrage, l'ensemble d'obturation comprenant une pluralité de blocs d'obturation emboîtés de manière étanche entre les blocs de centrage dans leur configuration dilatée, et l'élément d'ancrage comprend une pluralité de chiens d'ancrage répartis angulairement autour de l'axe longitudinal X-X' ;
- l'ensemble de centrage et l'ensemble d'obturation comprennent chacun des branches de sollicitation radiale de chaque bloc de centrage et de chaque bloc d'obturation vers l'axe longitudinal X-X', l'élément d'ancrage comprenant des branches de rappel des chiens vers l'axe longitudinal X-X' ; et
- les branches de sollicitation radiale des blocs de centrage et/ou les branches de rappel sont liées avec un jeu longitudinal dans une cage montée coulissante longitudinalement autour du corps.

L'invention a en outre pour objet un procédé de mise en place d'un mandrin tel que défini ci-dessus, dans un conduit de circulation d'un fluide, caractérisé en ce qu'il comprend les étapes suivantes :
- insertion du mandrin dans le conduit, l'ensemble de centrage et l'ensemble d'obturation occupant leurs configurations contractées, l'élément d'ancrage occupant son état rétracté ; puis
- déploiement radial de l'ensemble de centrage vers sa configuration au moins partiellement dilatée et de l'ensemble d'ancrage vers son état déployé, pour appliquer au moins en partie l'élément d'ancrage et l'ensemble de centrage contre une paroi intérieure du conduit et maintenir le corps à l'écart de la paroi intérieure, le ou chaque passage axial et le ou chaque conduit axial étant laissés au moins partiellement dégagés pour permettre le passage d'un fluide à travers le ou chaque passage axial et à travers le ou chaque conduit axial ; puis
- déplacement de l'ensemble d'obturation vers sa configuration dilatée pour obturer le ou chaque passage axial et définir une surface périphérique d'application de l'ensemble annulaire d'étanchéité sur le conduit et une surface périphérique d'application de l'ensemble annulaire d'étanchéité sur le corps continues sur au moins une périphérie autour de l'axe longitudinal X-X', l'élément d'ancrage restant sensiblement dans son état déployé lors du déploiement radial de l'ensemble d'obturation.

L'invention sera mieux comprise à la lecture de la description qui va suivre, donnée uniquement à titre d'exemple, et faite en se référant aux dessins annexés sur lesquels :
- la Figure 1 est une vue prise en coupe suivant un plan axial médian d'un premier mandrin selon l'invention, lors de son introduction dans un conduit de circulation de fluide ;
- la Figure 2 est une vue prise en coupe suivant le plan transversal II de la Figure 1 ;
- la Figure 3 est une vue analogue à la Figure 1 lors du centrage du mandrin dans le conduit ;
- la Figure 4 est une vue prise en coupe suivant le plan transversal IV de la Figure 2 ;
- la Figure 5 est une vue analogue à la Figure 1 du mandrin lors de l'ancrage de ce mandrin dans le conduit ;
- la Figure 6 est une vue prise en coupe suivant le plan transversal VI de la Figure 5 ;
- la Figure 7 est une vue analogue à la Figure 1 du mandrin après la réalisation de l'étanchéité ;
- la Figure 8 est une vue prise en coupe suivant le plan transversal VIII de la Figure 7 ;
- la Figure 9 est une en perspective de trois-quarts face du mandrin de la Figure 1 ;
- la Figure 10 est une vue analogue à la Figure 9 du mandrin de la Figure 7 ;
- la Figure 11 est une vue agrandie d'un détail marqué XI sur la Figure 7 ;
- la Figure 12 est une vue analogue à la Figure 7, dans laquelle l'élément d'étanchéité et l'élément d'ancrage du mandrin ont été inversés ;
- la Figure 13 est une vue schématique d'un deuxième mandrin selon l'invention ;
- la Figure 14 est une vue prise en coupe suivant le plan transversal XIV de la Figure 13 ;
- la Figure 15 est une vue analogue à la Figure 13, l'étanchéité ayant été réalisée ; et
- la Figure 16 est une vue prise en coupe suivant le plan transversal XVI de la Figure 15.

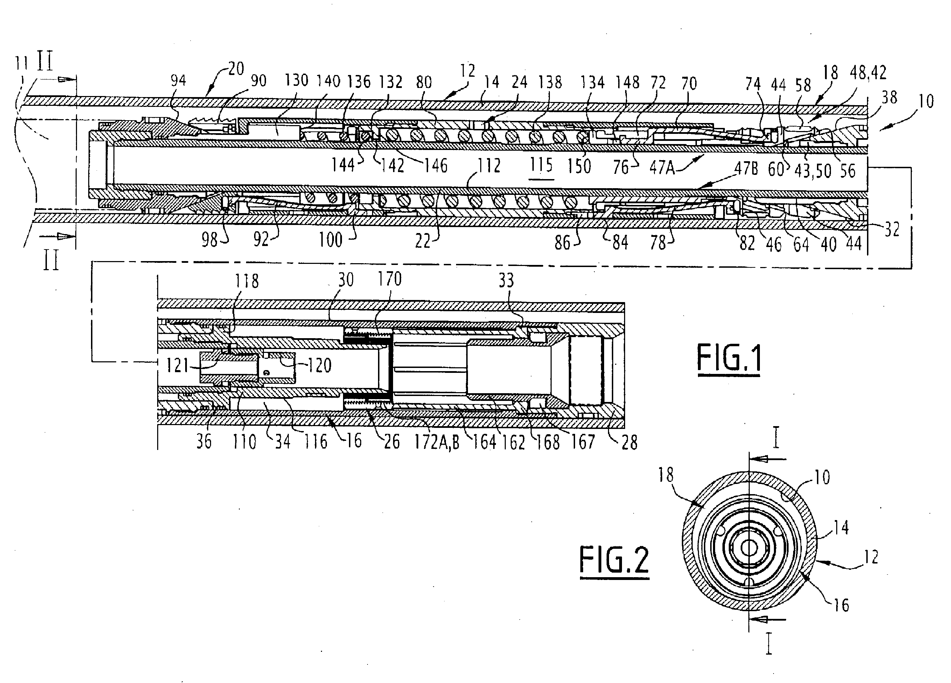

Le premier exemple de mandrin 10 selon l'invention, représenté sur les Figures 1 à 10, est destiné à être introduit dans un conduit de production 12 de puits de pétrole disposé dans le sous-sol, également désigné par le terme « tubage de production ».

Le mandrin 10 est destiné à être fixé de manière étanche dans le conduit 12. Le mandrin 10 porte un ensemble inférieur 11 qui peut être un outil de fond, une vanne, une crépine, un tube de passage de fluide, ou un bouchon, avantageusement doté d'un système d'égalisation de pression.

Dans l'exemple représenté sur les Figures 1 à 8, le conduit 12 présente une paroi intérieure 14 sensiblement lisse en regard du mandrin 10. Le conduit 12 est ainsi dépourvu de gorge annulaire d'ancrage désignée par le terme « landing nipple ».

Comme illustré par les Figures 1 à 10, le mandrin 10 comprend, de haut en bas, un manchon supérieur 16 d'axe longitudinal X-X', un élément annulaire d'étanchéité 18 déployable radialement pour réaliser une barrière d'étanchéité autour du mandrin 10 sur la paroi intérieure 14, et un ensemble d'ancrage 20 du mandrin 10 déployable radialement.

Dans cette configuration, le mandrin 10 est destiné principalement à être utilisé dans un puits dont la pression sous le mandrin 10 est supérieure à la pression au-dessus du mandrin 10. Il peut être éventuellement utilisé dans un puits dont la pression sous le mandrin 10 est légèrement inférieure à la pression au-dessus du mandrin 10.

Le mandrin 10 comprend en outre un tube de manoeuvre 22 de l'élément annulaire 18 et de l'ensemble d'ancrage 20, des moyens 24 de séquençage de l'expansion radiale de l'élément 18 et de l'ensemble 20, et des moyens 26 de verrouillage du tube de manoeuvre 22 par rapport au mandrin supérieur 16.

Le manchon supérieur 16 et le tube 22 forment un corps sensiblement tubulaire d'axe X-X'.

Le manchon tubulaire 16 comprend, de haut en bas sur la Figure 1, un chapeau de raccordement 28 à une ligne de travail au câble via un outil de pose et à un outil de dépose (non représenté), une partie tubulaire intermédiaire creuse 30 et une partie 32 d'expansion radiale convergente vers le fond du puits, pour supporter l'élément annulaire d'étanchéité 18.

En variante, le chapeau 28 est adapté pour recevoir une ligne de déploiement par tube creux (« coiled tubing ») ou un train de tiges de descente.

Dans une autre variante, le chapeau forme une interface avec une garniture de liaison ou « straddle packer » ou avec un autre mandrin 10 placé dans le même sens ou en sens inverse.

Le manchon 16 délimite, sur toute sa longueur, un passage interne 34 d'axe X-X' débouchant aux extrémités supérieures et inférieures du manchon 16.

Le chapeau de raccordement 28 comprend une gorge de réception d'une tête de raccordement à une ligne de travail au câble (non représentée), pour le déploiement du mandrin 10 dans le puits et son retrait hors du puits. La ligne de travail au câble est par exemple décrite dans la demande française FR-A-2 848 363 de la Demanderesse.

La partie tubulaire intermédiaire 30 est vissée sous le chapeau 28. Elle définit au voisinage du chapeau 28, une gorge annulaire 33 de réception des moyens libérables de verrouillage 26. Cette gorge annulaire 33 s'ouvre dans le passage interne 34.

La partie tubulaire 30 délimite dans le passage 34, au voisinage de la partie d'expansion radiale 32, une butée 36 inférieure du tube de manoeuvre 22 comme on va le décrire en détail plus bas.

La partie d'expansion radiale 32 présente extérieurement une surface conique supérieure 38 d'appui de l'élément annulaire d'étanchéité 18 et des marches de centrage 40 situées sous cette surface conique 38.

La surface conique 38 est convergente vers le fond du puits. Elle s'étend sur une périphérie autour de l'axe X-X'.

Chaque marche de centrage 40 présente une surface périphérique de diamètre constant autour de l'axe X-X' s'étendant vers le bas dans le prolongement de la surface conique 38. La marche 40 présente sensiblement la même épaisseur que la surface conique 38 à son extrémité inférieure.

Les marches 40 sont espacées entre elles autour de l'axe X-X'. Elles définissent entre elles des encoches délimitées intérieurement par le tube 22.

La partie d'expansion radiale 32 définit ainsi un premier chemin axial de came s'étendant de bas en haut le long de chaque marche 40 et suivant la surface conique 38.

Elle définit un deuxième chemin axial de came s'étendant axialement le long du tube 22 dans chaque encoche entre deux marches 40, puis suivant la surface conique 38.

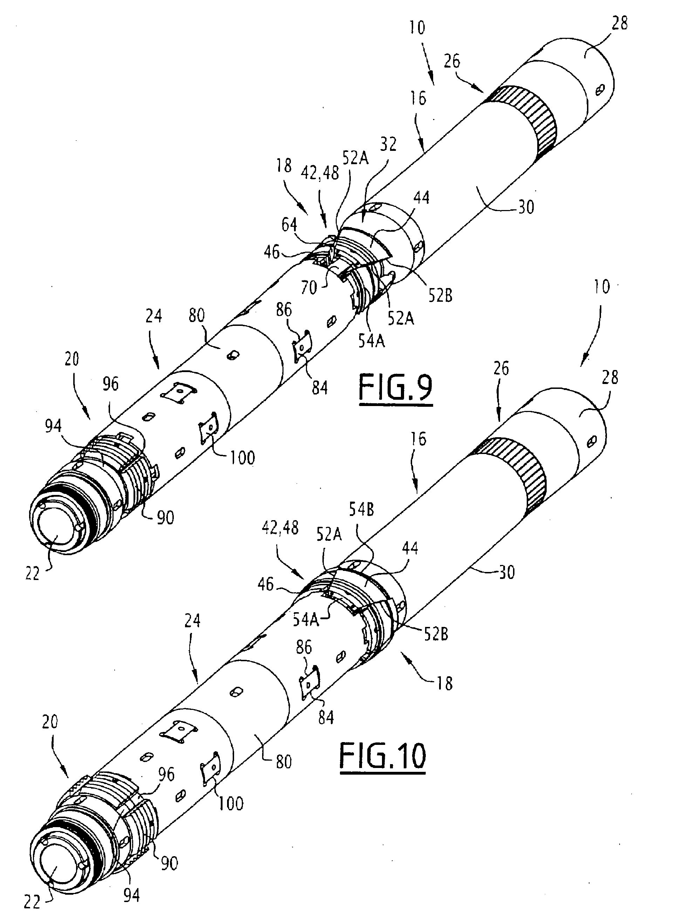

Comme illustré sur la Figure 10, l'élément annulaire d'étanchéité 18 comprend, en se déplaçant le long d'une surface périphérique extérieure 42 et d'une surface périphérique intérieure 43 autour de l'axe longitudinal X-X', une alternance de blocs supérieurs d'étanchéité 44, formant un ensemble d'étanchéité du mandrin 10, et une pluralité de blocs inférieurs de centrage 46, formant un ensemble de centrage du mandrin 10.

L'ensemble de centrage et l'ensemble d'étanchéité comprennent chacun des moyens 47A, 47B de rappel radial de chaque bloc 44, 46 contre le tube de manoeuvre 22, vers l'axe X-X'.

Les blocs supérieurs 44 et les blocs inférieurs 46 sont disposés tête bêche suivant l'axe longitudinal X-X' comme décrit dans la demande française n° 05 12435 de la Demanderesse.

Dans l'exemple représenté sur la Figure 10, l'élément annulaire 18 comprend trois blocs supérieurs 44 et trois blocs inférieurs 46. Chaque bloc 44, 46 délimite une face extérieure 48 d'appui sur le conduit 12, une face intérieure 50 d'appui sur le manchon 16 et deux surfaces latérales 52A, 52B d'expansion raccordant les faces 48 et 50.

Chaque bloc 44, 46 présente en outre une surface inférieure 54A et une surface supérieure 54B sensiblement perpendiculaires à l'axe X-X' sur la Figure 10.

Chaque face extérieure 48 est de forme sensiblement cylindrique autour de l'axe X-X' et forme une partie de la surface périphérique extérieure 42. Chaque face intérieure 50 présente une forme conique convergeant vers le haut le long de l'axe X-X' et forme une partie de la surface périphérique intérieure 43. Les faces intérieures 50 sont de forme sensiblement conjuguées à la surface conique 38 du manchon.

Les surfaces latérales 52A, 52B sont de formes sensiblement hélicoïdales d'axe X-X'.

Les blocs inférieurs 46 et supérieurs 44 présentent une forme générale de trapèze en vue de côté, avec la hauteur de chaque trapèze parallèle à l'axe longitudinal X-X'.

Ainsi, les surfaces latérales 52A, 52B de chaque bloc supérieur 44 s'écartent l'une de l'autre en se déplaçant suivant l'axe X-X' vers le haut alors que les surfaces latérales 52A, 52B de chaque bloc inférieur 46 convergent l'une vers l'autre suivant le même déplacement.

Chaque bloc 44, 46 comprend une armature centrale métallique 56, une garniture extérieure 58 d'étanchéité sur le conduit 12, et une garniture intérieure 60 d'étanchéité sur le manchon 16, montées de part et d'autre de l'armature 56.

L'armature 56 présente une section transversale sensiblement en forme de « I ». Elle présente ainsi un bord supérieur et un bord inférieur raccordés entre eux par une âme centrale d'épaisseur inférieure à celles du bord supérieur et du bord inférieur.

Les bords supérieurs et inférieurs délimitent avec l'âme centrale un logement annulaire extérieur et un logement annulaire intérieur qui reçoivent respectivement les garnitures 58 et 60. Ces logements débouchent latéralement dans les surfaces latérales 52A, 52B du bloc 44, 46 et sont obturés longitudinalement par les bords inférieurs et les bords supérieurs. Ainsi, le fluage des garnitures 58, 60 est contenu longitudinalement dans les logements intérieur et extérieur.

Le bord supérieur comprend, de part et d'autre de l'âme centrale, des lèvres déformables axialement et/ou radialement vers le haut lors du contact avec la paroi intérieure du conduit 12 et avec la surface conique 38 du manchon 16 sous l'effet de la déformation des garnitures 54, 56.

L'armature 56 est par exemple réalisée à base de métal. Les garnitures 58, 60 sont par exemple réalisées à base d'élastomère ou de plastique. La garniture intérieure 58 est disposée en appui sur la surface conique 38, alors que la garniture extérieure 60 est destinée à être appliquée sur la paroi intérieure 14 du conduit 12. Les garnitures 58, 60 sont par exemple réalisées par surmoulage sur l'armature 56.

En variante, l'armature 56 peut être réalisée en plastique. Dans une autre variante, les garnitures 58 peuvent être réalisées en un métal plus mou que celui de l'armature 56, par exemple du plomb.

Comme illustré par les Figures 1 à 7, les blocs inférieurs 46 de centrage sont déplaçables longitudinalement et radialement par rapport au corps sur le premier chemin de came, entre une configuration contractée contre le tube 22, une configuration partiellement dilatée de centrage, et une configuration totalement dilatée en appui sur la surface conique 38.

Les blocs supérieurs 44 d'étanchéité sont déplaçables radialement et longitudinalement de manière coordonnée avec les blocs inférieurs 46 par rapport au corps sur le deuxième chemin de came, entre une configuration contractée radialement, décalée longitudinalement au dessus des blocs inférieurs 46 et une configuration totalement dilatée emboîtée dans les blocs inférieurs 46, comme on va le détailler plus bas.

Dans leur position contractée représentée sur les Figures 1 et 9, les blocs inférieurs 46 sont disposés en appui sur le tube de manoeuvre 22, sous la marche 40. Les blocs inférieurs 46 présentent ainsi un encombrement radial minimal.

Dans cette configuration, les blocs supérieurs 44 occupent également leur position contractée en appui partiel sur la surface conique 38 et sur le tube 22.

Les blocs supérieurs 44 sont décalés longitudinalement vers le haut par rapport aux blocs inférieurs 46. Ainsi, la distance qui sépare la surface supérieure d'un bloc supérieur 44, de la surface supérieure d'un bloc inférieur 46 adjacent est maximale, les blocs 44, 46 occupant alors une position éloignée.

L'élément annulaire 18 est ainsi partiellement déboîté et présente un encombrement radial minimal. Dans cette configuration le mandrin 10 peut être convoyé de manière sûre et facile dans le conduit 12, en limitant son risque de blocage dans le conduit 12 et en facilitant sa descente à contre courant du flux de fluide passant dans le conduit 12, tout en protégeant l'ensemble annulaire 18.

Dans leur configuration partiellement dilatée représentée sur la Figure 2, les blocs inférieurs 46 ont été déplacés longitudinalement vers le haut par rapport aux blocs supérieurs 44 pour prendre appui sur une marche de centrage 40 entre deux blocs supérieurs 44. Les blocs inférieurs 46 présentent alors une configuration partiellement dilatée radialement dans laquelle ils forment des patins d'appui sur la paroi intérieure 14 du conduit 12. Les blocs supérieurs 44 sont maintenus dans leur configuration sensiblement contractée, dans l'espace libéré par l'expansion radiale des blocs inférieurs 46.

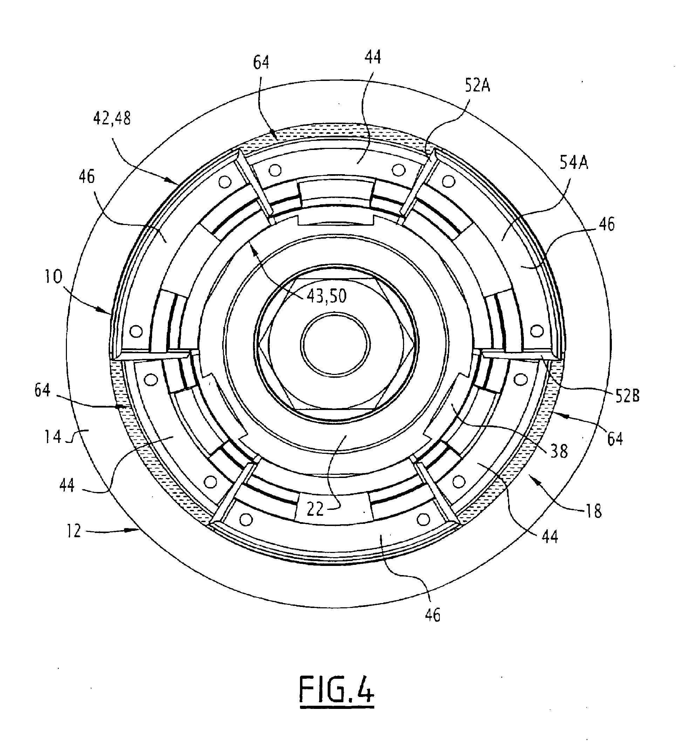

Comme illustré par la Figure 4, les blocs inférieurs 46 et les blocs supérieurs 44 délimitent entre eux, à travers l'élément annulaire 18, des passages axiaux 64 de circulation d'un fluide en forme d'encoches axiales. Les passages 64 sont partiellement dégagés pour le passage d'un fluide.

Chaque passage axial 64 s'étend latéralement entre les bords latéraux 52A, 52B de deux blocs inférieurs 46 adjacents. Il est délimité vers l'axe X-X' par la face extérieure 48 d'un bloc supérieur 46, située radialement proche de l'axe X-X' par rapport aux faces extérieures 48 des blocs inférieurs 44 adjacents.

Ces passages 64 s'étendent donc à travers l'ensemble annulaire 18 et débouchent vers le haut et vers le bas à travers l'ensemble annulaire 18, entre deux blocs inférieurs 44. Les passages 64 s'étendent radialement à l'intérieur du volume cylindrique défini par les faces extérieures 48 des blocs inférieurs 44.

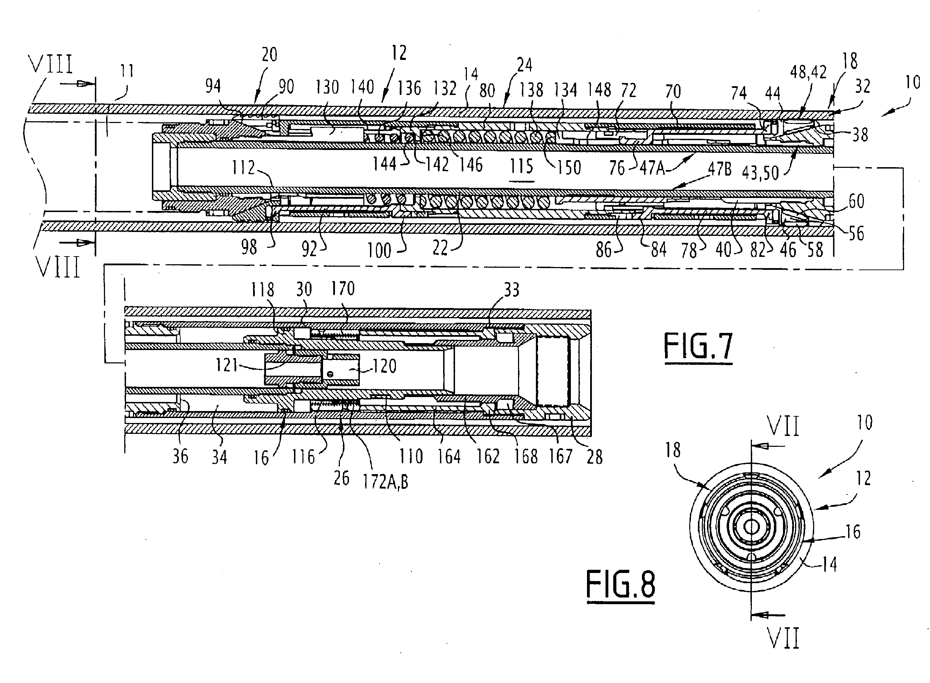

Dans la configuration dilatée des blocs supérieurs 44 et des blocs inférieurs 46 représentée sur les Figures 7 et 10, la distance qui sépare le bord supérieur d'un bloc inférieur 46, du bord supérieur d'un bloc supérieur 44 adjacent est minimale et les blocs 44, 46 occupent une position rapprochée emboîtée les uns dans les autres.

Comme on le verra plus bas, l'emboîtement des blocs inférieurs 46 entre les blocs supérieurs 44 par coulissement des surfaces latérales 52A, 52B des blocs 44, 46 sur les surfaces latérales 52B, 52A des blocs adjacents 46, 44, provoque l'expansion radiale de l'élément annulaire 18 par effet de coin à la fois radial et circonférentiel. Les passages axiaux 64 délimités entre les blocs inférieurs 46 sont alors obturés totalement par les blocs supérieurs 44 pour réaliser une étanchéité à travers l'élément annulaire 18, autour du manchon supérieur 16.

L'élément annulaire 18 présente ainsi un encombrement radial maximal avec une surface périphérique extérieure 42 sensiblement cylindrique continue sur au moins une périphérie autour de l'axe X-X', et une surface périphérique intérieure 43 continue sur au moins une périphérie autour de l'axe X-X'.

Dans la configuration dilatée, les logements annulaires extérieur et intérieur de chaque bloc 44, 46 débouchent respectivement dans les logements extérieur et intérieur des blocs 44, 46 adjacents, de sorte que les garnitures 58, 60 intérieures et extérieures s'étendent continûment sur au moins une périphérie autour de l'axe X-X'. Les garnitures extérieures 56 définissent ainsi la surface périphérique 42 extérieure d'appui sur la paroi 14 du conduit 12. Les garnitures intérieures 60 définissent la surface périphérique intérieure 43 d'appui sur la surface 38 du manchon 16, continue sur au moins une périphérie autour de l'axe X-X'.

En outre, chaque extrémité latérale d'un bord supérieur d'un bloc 44, 46, est appliquée au moins partiellement sur l'extrémité latérale d'un bord supérieur d'un bloc 44, 46 adjacent. De même, l'extrémité latérale de chaque bord inférieur d'un bloc 44, 46 est appliquée sur l'extrémité latérale d'un bord inférieur de chaque bloc 44, 46 adjacent. Les logements annulaires intérieur et extérieur sont ainsi obturés longitudinalement sur toute la périphérie de l'élément annulaire 18.

Le rapport de l'encombrement radial de l'élément annulaire 18 dans la configuration dilatée à l'encombrement radial de l'élément annulaire 18 dans la configuration contractée est ainsi compris entre 1,05 et 1,50 et est de préférence supérieur à 1,15. L'élément annulaire 18 dans la configuration contractée est ainsi contenu dans l'encombrement radial de cet élément dans la configuration dilatée, et avantageusement dans l'encombrement radial du manchon 16.

Les moyens de rappel radial 47A des blocs supérieurs 44 comprennent, pour chaque bloc 44, une branche longitudinale 70 supérieure de rappel, et une base annulaire inférieure 72 reliant les branches 70.

Chaque branche 70 s'étend entre une extrémité supérieure 74 fixée sur un bloc supérieur 44 et une extrémité inférieure 76 solidaire de la bague annulaire 72.

Chaque branche supérieure 70 est configurée pour plaquer les blocs supérieurs 44 radialement vers l'axe X-X' contre la surface conique 38 et le tube de manoeuvre 22. La bague 72 et les extrémités inférieures 76 sont montées coulissantes longitudinalement sur le tube de manoeuvre 22 en dessous des marches de centrage 40 sans possibilité de rotation autour de l'axe X-X'.

La base annulaire 72 est montée coulissante longitudinalement par rapport au tube 22. Elle délimite des passages longitudinaux 86 de coulissement des moyens de rappel 47B des blocs inférieurs 46. Aucun organe de liaison frangible n'est interposé entre le tube 22 et la base 72.

Les moyens de rappel 47B des blocs inférieurs 46 comprennent pour chaque bloc 46, une branche longitudinale 78 de rappel, et une chemise 80 périphérique, dans laquelle les branches longitudinales 78 sont montées.

Les branches de rappel 78 s'étendent entre une extrémité supérieure 82 fixée sur les blocs inférieurs 46, et une extrémité inférieure 84 reliée par une liaison glissière d'axe X-X' à la chemise 80, à travers un passage 86.

La chemise 80 est montée mobile longitudinalement autour du tube de manoeuvre 22. Elle s'étend entre l'élément d'ancrage 20 et l'élément d'étanchéité 18 pour couvrir sensiblement totalement le tube 22. Aucun organe de liaison frangible n'est interposé entre le tube 22 et la chemise 80.

La chemise 80 s'étend en regard des branches de rappel 78 et délimite des passages 86 longitudinaux de longueur légèrement supérieure à l'extrémité inférieure 84 des branches inférieures 78. Un léger coulissement d'axe X-X' axial de chaque extrémité 84 dans un passage 86 est possible, pour permettre un léger déplacement vers le haut des blocs inférieurs 46 sous l'effet de la pression après la réalisation de l'étanchéité autour du mandrin 10.

La surface inférieure 54A de chaque bloc inférieur 46 est placée en appui sur le bord supérieur de la chemise 80, lors de la pose.

L'élément d'ancrage 20 est décalé longitudinalement par rapport à l'élément annulaire d'étanchéité 18. A cet égard, l'élément 18 est situé au voisinage de l'extrémité supérieure du mandrin 10, alors que l'élément d'ancrage 20 est situé au voisinage de l'extrémité inférieure du mandrin 10 dans une partie inférieure du tube de manoeuvre 22.

La distance qui sépare l'élément d'ancrage 20 de l'élément d'étanchéité 18 est supérieure à au moins deux fois le diamètre extérieur de l'élément d'étanchéité dans la configuration dilatée des blocs 44, 46.

L'élément d'ancrage 20 comprend une pluralité de chiens d'ancrage 90 répartis angulairement autour de l'axe X-X', et pour chaque chien 90, une branche 92 de sollicitation radiale du chien 90 vers l'axe X-X'.

Les chiens d'ancrage 90 présentent une surface périphérique extérieure dentée pour l'accrochage par indentation sur la paroi intérieure 14 du conduit 12.

Ils présentent une surface supérieure placée en appui sous le bord inférieur de la chemise 80 lors de la pose.

Comme on le verra plus bas, les chiens 90 sont déployables radialement le long d'une surface conique 94 du tube 22, entre un état rétracté contre le tube de manoeuvre 22 et un état déployé radialement, obtenu avant l'obturation des passages axiaux 64 délimités entre les blocs inférieurs 46 et les blocs supérieurs 44.

La surface conique inférieure 94 converge vers le haut et vers la surface conique supérieure 38.

Dans leur état déployé, les chiens 90 délimitent entre eux des conduits longitudinaux 96 permettant le passage de fluide.

Les branches de rappel 92 s'étendent longitudinalement vers le haut entre une extrémité inférieure 98 fixée sur un chien 90 et une extrémité supérieure 100 reliée par une liaison glissière d'axe X-X' à la chemise de rappel 80 au dessus de son bord inférieur. Les branches 92 sollicitent radialement vers l'axe X-X' les chiens 90 contre la surface conique inférieure 94 et contre le tube 22.

Le tube de manoeuvre 22 est monté à coulissement dans le manchon tubulaire 16. Il comprend une partie supérieure 110 disposée dans le passage 34, une partie inférieure 112 qui fait saillie longitudinalement vers le bas à l'extérieur du manchon 16. L'ensemble inférieur 11 est vissé à une extrémité inférieure de la partie inférieure 112.

Le tube 22 définit une lumière centrale creuse 115 d'axe X-X' qui débouche à son extrémité supérieure.

La partie supérieure 110 présente extérieurement une région supérieure lisse et une région inférieure munie d'une denture 116 d'encliquetage de pas P destinée à coopérer avec les moyens de verrouillage 26, comme on le verra plus bas.

La partie supérieure 110 est délimitée inférieurement par une nervure annulaire 118 apte à coopérer avec la butée inférieure 36 pour empêcher le déplacement vers le bas du tube 22 au-delà d'une position inférieure. La nervure 118 forme un piston d'appui permettant de réduire la force exercée par la pression différentielle appliquée au mandrin 10 sur le moyen de verrouillage 26.

Le tube 22 comprend en outre un support de traction 120 disposé dans la lumière 115 pour l'accrochage de l'outil de pose.

Le support de traction 120 est placé au voisinage de la nervure 118. Il est relié à la paroi du tube de manoeuvre 22 par une rondelle frangible tarée 121.

La paroi du tube 22 définit un logement annulaire extérieur 122A. Le logement 122A reçoit une matrice de cisaillement 122B et une partie extérieure 122C de la rondelle frangible 121 placée sous la matrice 122B.

La paroi du support 120 définit un logement annulaire intérieur 123A, placé en regard du logement extérieur 122A. Le logement 122B reçoit un poinçon annulaire 123B de serrage et une partie intérieure 123C de la rondelle 121. Le poinçon 123B et la matrice 122B sont avantageusement réalisés en céramique.

La rondelle 121 est découpable entre sa partie extérieure 122C et sa partie intérieure 123C, par poinçonnage le long de la périphérie du support 120, pour libérer le tube 22 par rapport au support 120.

La découpe par poinçonnage permet de régler facilement la force de rupture nécessaire pour couper la rondelle 121 en choisissant l'épaisseur et le matériau constituant la rondelle 121. Cette découpe est propre et évite la présence de débris dans le tube 22 après la découpe et permet de maintenir la surface intérieure du tube 22 lisse évitant les singularités dans l'écoulement, sources d'érosion.

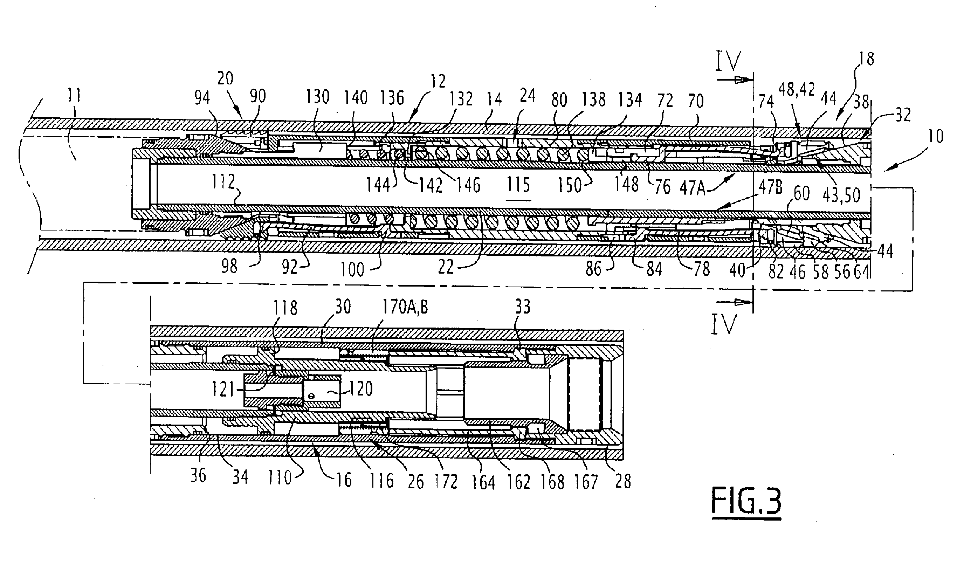

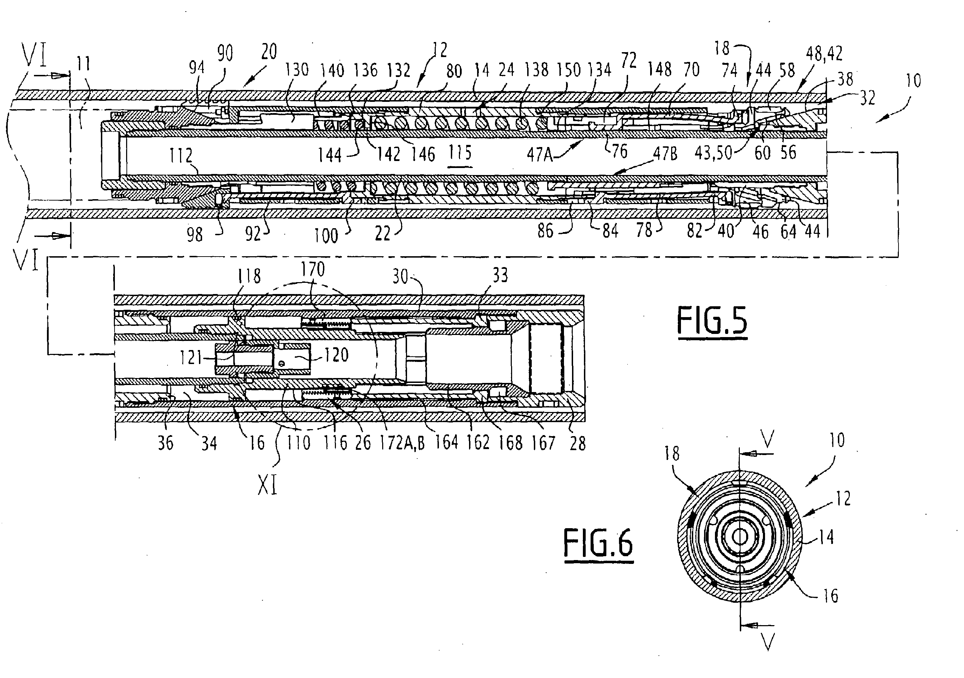

Le tube de manoeuvre 22 est mobile longitudinalement par rapport au manchon 16 entre une position inférieure de repos (Figure 1) dans laquelle les blocs supérieurs 44 et les blocs inférieurs 46 occupent leur configuration contractée, une première position intermédiaire de centrage (Figure 3) dans laquelle les blocs inférieurs 46 occupent leur configuration partiellement dilatée en appui sur les marches de centrage 40, une deuxième position intermédiaire d'ancrage (Figure 5) dans laquelle les chiens d'ancrage 90 occupent leur état déployé, et les passages axiaux 64 restent dégagés, et une position supérieure d'étanchéité (Figure 7), dans laquelle les blocs supérieurs 44 et les blocs inférieurs 46 sont emboîtés les uns dans les autres et forment un ensemble annulaire étanche autour du manchon 16 pour obturer les passages axiaux 64.

Comme on le verra plus bas, les moyens de séquençage 24 comprennent en outre un ressort inférieur 136 de sollicitation des chiens d'ancrage 90 vers leur état rétracté et un ressort supérieur 138 de sollicitation des blocs inférieurs 46 et des blocs supérieurs 44 vers leur configuration contractée.

La butée inférieure 130 s'étend autour du tube de manoeuvre 22, au-dessus de l'ensemble inférieur 11.

Elle est en partie couverte par la chemise 80, et s'étend en regard des branches 92 de rappel des chiens sur les surfaces coniques 94. La butée inférieure 130 présente une surface radiale supérieure 140 d'appui du ressort inférieur 136.

La butée intermédiaire 132 est solidaire de la chemise 80. Elle fait saillie radialement vers le tube 22 à partir de la chemise 80. Elle présente une surface périphérique intérieure 142 qui s'appuie sur le tube 22, et de part et d'autre de la surface 142, une surface radiale inférieure 144 d'appui du ressort inférieur 136 et une surface radiale supérieure 146 d'appui du ressort supérieur 138.

La butée supérieure 134 solidaire du manchon 16 s'étend sous la surface conique 38 et sous la marche 40 autour du tube de manoeuvre 22. La butée 134 délimite intérieurement des passages 148 de coulissement des extrémités inférieures 76 des branches longitudinales 70 de rappel des blocs supérieurs 44, dans lesquels sont reçus à coulissement longitudinal les extrémités inférieures 76.

La butée supérieure 134 présente une surface inférieure 150 d'appui du ressort supérieur 138.

Les ressorts 136, 138 sont montés en série. Ils sont maintenus précontraints initialement, respectivement entre les butées 130 et 132 et entre les butées 132 et 134, dans la position inférieure de repos du tube 22.

Le ressort inférieur 136 est un ressort hélicoïdal ou à spires ondulées. Il est logé radialement entre le tube de manoeuvre 22 et la chemise extérieure 80. Il s'appuie longitudinalement d'une part, sur la surface supérieure 140 de la butée inférieure 130, et d'autre part, sur la surface inférieure d'appui 144 de la butée intermédiaire mobile 132.

Le ressort supérieur 138 est aussi un ressort hélicoïdal ou à spires ondulées. Il est logé radialement entre le tube de manoeuvre 22 et la chemise 80. Il s'appuie longitudinalement d'une part, sur la surface supérieure 146 de la butée intermédiaire 132 et d'autre part, sur la surface inférieure 150 de la butée supérieure 134.

Les raideurs respectives des ressorts 136, 138 ou/et les précontraintes initiales respectives appliquées sur les ressorts 136, 138 sont choisies significativement différentes, pour obtenir un déploiement séquentiel et sans à-coups des blocs inférieurs 46, des chiens d'ancrage 90 et des blocs supérieurs 44.

Dans cet exemple, la raideur du ressort inférieur 136 est choisie supérieure à 1,3 fois la raideur du ressort supérieur 138, et les précontraintes du ressort inférieur 136 du ressort supérieur 138 sont sensiblement égales.

Les moyens de séquençage 24 sont dépourvus de tout organe de liaison frangible. Ainsi, les blocs inférieurs 46, les blocs supérieurs 44 et l'élément d'ancrage 20 sont montés coulissants autour du tube 22 et du manchon 16, sans interposition d'un organe de liaison frangible, le séquençage du déploiement étant obtenu uniquement par le choix du rapport des raideurs des ressorts 136, 138 et/ou du rapport de leurs précontraintes initiales.

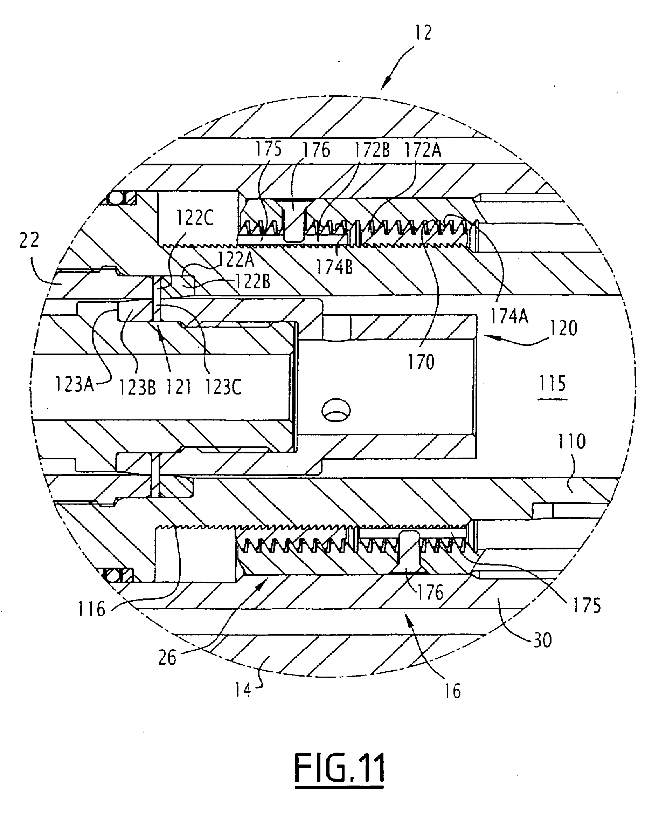

Les moyens de verrouillage 26 comprennent, de haut en bas sur les Figures 1, 3, 5, 7 et 11, une bague 162 de libération du tube 22 et une pince 164 de verrouillage du tube 22.

La bague de libération 162 est formée par un manchon sensiblement cylindrique.

La bague 162 est déplaçable entre une position supérieure de maintien de la pince 164, et une position inférieure de libération de cette pince 164 par rappel élastique. Elle délimite extérieurement un logement annulaire 167.

La pince 164 est également de forme tubulaire. Elle comprend un bourrelet supérieur 168 de blocage en position longitudinale, et une surface intérieure dentée 170 d'encliquetage du tube 22 fendue axialement.

Une bague supérieure 172A fendue axialement et une bague inférieure 172B fendue axialement sont engagées extérieurement dans la surface intérieure dentée 170, entre cette surface 170 et le tube 22. Chaque bague intermédiaire 172A, 172B présente une surface intérieure d'encliquetage du tube 22 et une surface extérieure dentée 174A, 174B.

Les surfaces dentées 174A, 174B sont de même pas « P » égal au pas de la denture 116. Toutefois, les surfaces 174A, 174B sont vissées dans la surface dentée 170 avec leurs dentures présentant un décalage longitudinal d'un demi-pas « P/2 » pour permettre l'engagement successif et cyclique de la denture 116 avec chacune des surfaces dentées 174A, 174B.

Un piton 176A, 176B introduit dans chaque fente de part et d'autre de la surface dentée 170 maintient la position angulaire de chaque bague 172A, 172B par rapport à la surface dentée 170.

La pince de verrouillage 164 est mobile axialement entre une position supérieure de blocage du tube 22, dans laquelle le bourrelet 168 est reçu dans la gorge annulaire 33 du manchon 16, et une position inférieure dans laquelle le bourrelet 168 est reçu dans le logement 167 de la bague de libération.

Le fonctionnement du mandrin 10 selon l'invention va maintenant être décrit.

Initialement, comme représenté sur la Figure 1, le mandrin 10 est placé dans une configuration de descente dans le conduit 12.

A cet effet, le tube 22 est placé dans sa position inférieure de repos dans laquelle la distance qui sépare la surface conique supérieure 38 sur le manchon 16 et la surface conique inférieure 94 sur le tube 22 est maximale.

Dans cette position, la nervure annulaire 118 est disposée en appui contre la butée 36. Les ressorts de rappel 136 et 138 maintiennent le tube 22 dans sa position inférieure par leur précontrainte.

Les blocs inférieurs 46 et les blocs supérieurs 44 occupent leur configuration contractée contre le tube 22. Ainsi, les blocs inférieurs 46 sont maintenus en appui sur le tube 22 sous la marche 40 par les branches inférieures 78. Les blocs supérieurs 44 sont décalés longitudinalement vers le haut par rapport aux blocs inférieurs 46.

Les blocs supérieurs 44 s'appuient aussi sur le tube 22 sous l'effet du rappel radial engendré par les branches supérieures 70. L'ensemble annulaire 18 occupe alors un encombrement radial minimal, inférieur ou égal à l'encombrement radial maximal du corps 16, 22 et de la chemise 80.

De même, les branches de rappel 92 maintiennent en appui les chiens d'ancrage 90 contre le tube 22 au dessus de la surface conique 94. Les chiens 90 occupent alors leur état rétracté, ce qui permet une descente aisée dans le conduit 12, sans risque d'endommagement de l'élément annulaire 18 et des chiens 90.

L'interstice minimal entre le mandrin 10 et la paroi intérieure 14 du conduit 12 est maximisé et suffisamment large pour limiter les problèmes dus au déplacement du mandrin 10 à contre courant du flux de fluide présent dans le conduit 12, ou évite au mandrin 10 d'être entraîné par un courant.

Dans cette configuration de descente, la bague de libération 162 est disposée de sorte que le logement annulaire 167 s'étend au-dessus du bourrelet supérieur 168 de la pince de verrouillage 164, lequel est bloqué en position dans la gorge annulaire 33.

Un outil de pose est par ailleurs inséré dans la lumière centrale 115 avant la descente dans le puits pour coopérer avec le support de traction 120 et le chapeau de raccordement 28.

Cet outil présente alors une partie fixe (non représentée) en appui et/ou crochetée sur le chapeau 28 et une partie mobile (non représentée) encastrée dans le support de traction 120.

Le mandrin 10 est alors descendu dans le conduit 12 en accrochant l'outil de pose à une ligne de travail.

Lorsque le mandrin 10 atteint une position souhaitée dans le puits, l'outil de pose déplace le support de traction 120 vers le haut en maintenant le manchon 16 longitudinalement fixe par rapport au conduit 12. Le tube 22 passe alors de sa position de repos à sa première position intermédiaire de centrage, représentée sur la Figure 3.

Lors de ce déplacement, les blocs supérieurs 44 et les blocs inférieurs 46 se déplacent conjointement vers le haut. Les blocs inférieurs 44 se déplacent sur la marche de centrage 40, ce qui provoque leur expansion radiale partielle, pour venir partiellement en appui contre la paroi intérieure 14 du conduit 12.

Les blocs supérieurs 44 s'insèrent dans l'espace dégagé par l'expansion radiale des blocs inférieurs 46.

Lors du déplacement du tube de manoeuvre 22 vers le haut, le ressort inférieur 136 se comprime préférentiellement entre les butées 130, 132 par rapport au ressort supérieur 138 compte tenu de leurs raideurs et/ou de leurs précontraintes initiales. Ainsi, la course de rapprochement de la butée inférieure 130 vers la butée intermédiaire 132 est supérieure à la course de rapprochement de la butée intermédiaire 132 vers la butée supérieure 134.

Ceci provoque le déplacement des chiens d'ancrage 90 sur la surface conique 94 pour engendrer une expansion radiale partielle de ces chiens 90, de manière simultanée au déploiement des blocs inférieurs 46 dans leur configuration au moins partiellement dilatée et sans à-coups.

Les blocs inférieurs 46 et les chiens 90 étant déployés radialement, ils constituent des patins de centrage radial du mandrin 10. Ceci permet de centrer l'axe X-X' du mandrin par rapport à l'axe du conduit 12. Toutefois, ce centrage est effectué en laissant partiellement dégagés les passages axiaux 64 délimités entre les blocs inférieurs 46 partiellement dilatés et les blocs supérieurs 44 contractés, et les conduits de passage 96 entre les chiens 90 libres. Un écoulement de fluide autour du mandrin 10 est donc possible à travers les passages 64 et les conduits 96. Cet écoulement de fluide limite l'effet piston qui pourrait être obtenu si le conduit 12 était totalement obturé par le mandrin 10, ce dernier n'étant pas encore ancré.

Lors du déplacement du tube 22 entre la position de repos et la position de centrage, la partie supérieure 110 du tube remonte dans la pince de verrouillage 164. Toutefois, la denture extérieure 116 de la partie supérieure 110 reste située sous la surface intérieure dentée 170A, ce qui permet le retour du tube 22 vers sa position de repos, si la position du mandrin doit être modifiée, ou en cas de défaillance de l'outil de pose.

Puis, le tube 22 est encore déplacé vers le haut par rapport au manchon 16 pour atteindre sa deuxième position intermédiaire d'ancrage représentée sur la Figure 5.

Lors de ce déplacement, la compression préférentielle du ressort inférieur 136 se poursuit. Cette compression est supérieure à celle du ressort supérieur 138 grâce à la différence de raideur. Ainsi, les blocs 44, 46 restent sensiblement immobiles par rapport à la surface conique 38 et à la marche 40, alors que l'expansion radiale des chiens 90 se poursuit par coulissement relatif de la surface conique 94 sous les chiens 90 vers le haut.

Les chiens d'ancrage 90 pénètrent alors dans la paroi 14 pour assurer la fixation efficace du mandrin 10 en position dans le conduit 12, par indentation et légère déformation radiale du tube 14.

Lors de cette fixation, le centrage du mandrin 10 par rapport à l'axe du conduit est maintenu par la configuration partiellement dilatée des blocs inférieurs 46.

Après cette fixation initiale, le déplacement relatif du tube 22 par rapport au manchon 16 se poursuit par déplacement du manchon 16 vers le bas, le tube 22 restant fixe par rapport au conduit 12, en butée sur les chiens.

Lors du déplacement du tube 22 entre la position d'ancrage et la position d'étanchéité, le ressort supérieur de rappel 138 se comprime entre la butée supérieure 134 et la butée intermédiaire 132, ce qui provoque le déplacement longitudinal des blocs supérieurs 44 vers les blocs inférieurs 46 puis l'expansion radiale des blocs supérieurs 44 le long de la surface conique 38 pour atteindre leur configuration dilatée en appui sur la paroi intérieure 14 du conduit 12.

Simultanément, la surface conique 38 atteint les blocs inférieurs 46, ce qui produit un déplacement longitudinal relatif des blocs 46 par rapport aux blocs supérieurs 44. Les blocs 46 pénètrent alors entre les blocs supérieurs 44 pour obturer les passages axiaux 64 et réaliser l'étanchéité autour de l'élément annulaire 18.

Ainsi, lorsque les blocs supérieurs 44 et les blocs inférieurs 46 occupent leur configuration totalement dilatée, emboîtés les uns dans les autres, la surface périphérique extérieure 42 de l'élément annulaire 18, formée par les faces périphériques 50 d'appui sur le conduit 14, est continue sur au moins une périphérie autour de l'axe X-X'.

Cette surface périphérique extérieure 42 est appliquée contre la paroi intérieure 14 pour réaliser l'étanchéité autour du mandrin 10. La continuité de la surface périphérique extérieure 42 est assurée par la compression triaxiale des garnitures extérieures 58 dans les logements annulaires extérieurs.

En outre, les faces périphériques intérieures 50 des blocs 44, 46 sont appliquées par déformation contre la surface conique 38. La surface périphérique intérieure 43 de l'élément annulaire 18 d'étanchéité, formée par les faces périphériques intérieures 50, est continue sur au moins une périphérie autour de l'axe X-X'. Cette surface périphérique intérieure 43 est appliquée contre la surface d'appui 38 du manchon 16 pour réaliser l'étanchéité entre l'élément annulaire 18 et le manchon 16.

Le tube 22 occupe alors sa position supérieure d'étanchéité représentée sur la Figure 7. Dans cette position, la distance qui sépare la surface conique supérieure 38 de la surface conique inférieure 94 est minimale.

Lors de ce déplacement, la denture 116 du tube 22 s'engage dans les bagues intermédiaires 172A, 172B, de sorte que la pince 164 et le tube 22 sont en prise par encliquetage. Le retour du tube 22 vers sa position de repos est alors empêché avec un jeu minimal compte tenu de l'encliquetage cyclique dans l'une et l'autre des bagues 172A, 172B.

Puis, la rondelle de rupture 121 entre le support de traction 120 et le tube 22 est rompue et l'outil de pose est retiré du puits avec le support 120.

Le tube 22 occupe alors sa position supérieure d'étanchéité représentée sur la Figure 7. Dans cette position, la distance qui sépare la surface conique supérieure 38 de la surface conique inférieure 94 est minimale.

Lorsque le mandrin 10 doit être détaché du conduit 12, un outil (non-représenté) est introduit dans le passage 115 pour provoquer le déplacement vers le bas de la bague 162 par rapport au chapeau 28. Dans la position inférieure de la bague 162, les bourrelets 168 pénètrent dans les logements 167, et sont extraits des gorges annulaires 33.

L'ensemble formé par la bague de libération 162, la pince de verrouillage 164, les bagues fendues 172A, 172B et le tube 22, est alors libre de coulisser vers le bas dans le passage 34. Sous l'effet des ressorts 136, 138, le tube 22 se déplace également vers le bas, depuis sa position supérieure vers sa deuxième position intermédiaire, puis vers sa position initiale, jusqu'à ce que la nervure annulaire 118 bute contre la butée 36.

Durant cette phrase, il n'y a pas de déplacement relatif entre le tube 22 et la pince de verrouillage 164.

Le déplacement du tube 22 vers le bas par rapport au manchon 16 provoque la rétraction radiale des chiens d'ancrage 90 par glissement relatif vers le haut sur la surface conique inférieure 94. De même, les blocs supérieurs 44, 46 se déplacent vers le bas par rapport à la surface conique supérieure 38.

En outre, le relâchement des ressorts 136, 138 provoque le déplacement vers le bas du tube 22, et le déplacement vers le haut du manchon 16 par rapport à la chemise 80. Ainsi, le ressort supérieur 138 pousse le manchon 16 vers le haut, puis la base annulaire 72 pour déplacer longitudinalement les blocs inférieurs 46 par rapport aux blocs supérieurs 44 et provoquer ainsi le déboîtement de l'élément annulaire 18 et la libération des passages axiaux 64.

Les blocs inférieurs 46 et les blocs supérieurs 44 occupent ensuite leur configuration contractée, et les chiens d'ancrage 90 occupent leur état rétracté.

Le mandrin 10 est alors remonté facilement et simplement vers la surface dans le conduit 12.

Par ailleurs, le mandrin 10 est aussi configurable pour être utilisé principalement dans un puits pour lequel la pression au-dessus du mandrin est supérieure à celle en dessous du mandrin 10. Il peut être éventuellement utilisé dans un puits dont la pression au-dessus du mandrin 10 est légèrement inférieure à la pression sous le mandrin 10.

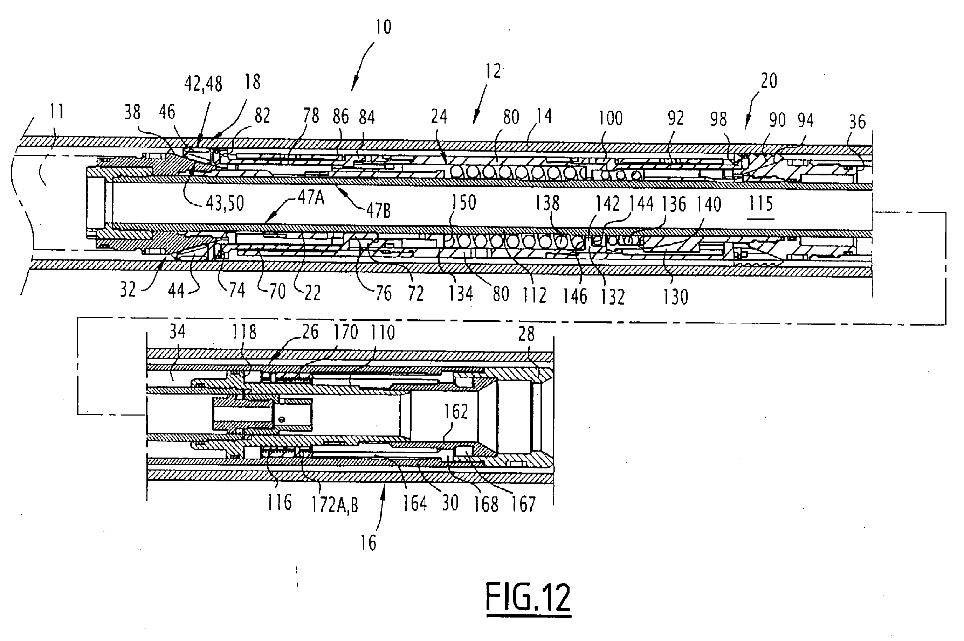

Ainsi, comme illustré par la Figure 12, la première surface d'expansion radiale 32, la deuxième surface d'expansion radiale 94, l'ensemble annulaire d'étanchéité 18, l'ensemble d'ancrage 20 et les moyens 24 de séquençage sont démontables de manière réversible par rapport au mandrin 16 et au tube 22, entre la configuration fonctionnelle supérieure décrite sur les Figures 1 à 10, et la configuration fonctionnelle inférieure décrite sur la Figure 12.

Dans la configuration fonctionnelle inférieure, la première surface d'expansion radiale 32 et l'ensemble annulaire d'étanchéité 18 ont été retounés par rapport à un plan transversal à l'axe X-X' et ont été montés à l'extrémité inférieure du tube 22.

Dans cette configuration, la première surface d'expansion radiale 32 présente une partie conique 38 convergeant vers le haut. Les blocs de centrage 46 sont situés au-dessus des blocs d'étanchéité 44.

De même, la deuxième surface d'expansion radiale 94 a été vissée à l'extrémité inférieure de la partie tubulaire creuse 30 du manchon 16 en remplacement de la première surface d'expansion radiale 32. Cette deuxième surface 94 converge désormais vers le bas.

Les chiens d'ancrage 90 ont été remontés au-dessus de l'ensemble annulaire d'étanchéité pour être placés en appui sur la deuxième surface d'expansion radiale 94.

La chemise 80 a été retournée et le ressort 136 de raideur élevée a été placé sous le ressort 138 de raideur faible.

Le fonctionnement du mandrin 10 reste identique.

La réversibilité d'un tel assemblage permet d'utiliser indifféremment le mandrin 10 dans l'une ou l'autre de ses configurations fonctionnelles, sans avoir à modifier ni sa structure ni ses composants.

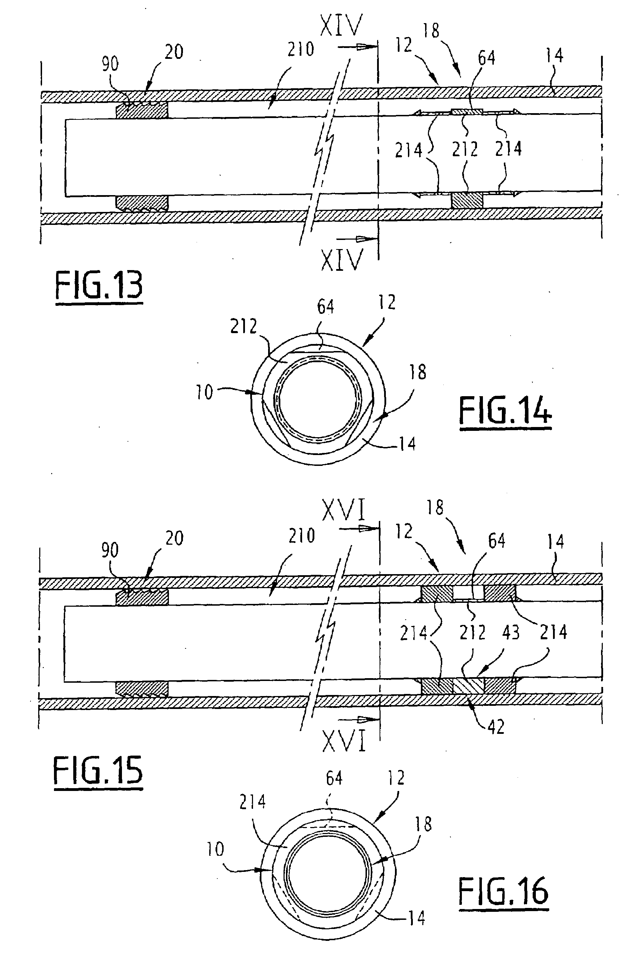

Dans la variante représentée sur les Figures 13 à 16, le deuxième mandrin 210 selon l'invention comprend un élément annulaire 18 d'étanchéité constitué par une garniture annulaire 212 de centrage déployable radialement, et par deux garnitures annulaires 214 d'obturation déployables radialement, placées longitudinalement de part et d'autre de la garniture annulaire de centrage 212.

Chaque garniture 212, 214 est déployable entre une configuration contractée contre le manchon 16 et une configuration dilatée dans laquelle elles occupent un diamètre maximal.

Dans sa configuration dilatée, la garniture de centrage 212 délimite, trois passages axiaux 64 répartis autour de l'axe X-X'. Les passages axiaux 64 s'étendent à travers la garniture 212 entre une surface supérieure et une surface inférieure de la garniture de centrage 212 où ils débouchent. Ils forment des encoches longitudinales débouchant radialement vers l'extérieur.

Les garnitures d'étanchéité 214 sont disposées de part et d'autre des passages axiaux 64. Dans la configuration contractée des garnitures 214, les passages axiaux 64 sont dégagés, alors que dans leur configuration dilatée, les garnitures 214 obturent les passages axiaux 64 vers le haut et vers le bas.

Le deuxième mandrin 210 selon l'invention présente un fonctionnement similaire à celui du premier mandrin. Ainsi, dans un premier temps, la garniture de centrage 212 et les chiens d'ancrage 90 sont déployés radialement au moins partiellement, pour assurer un centrage de l'axe X-X' du mandrin 10 par rapport à l'axe du conduit 12, par contact entre la paroi intérieure 14 et la garniture 214 et les chiens 90.

Dans cette configuration, les garnitures annulaires d'obturation 214 sont maintenues dans leur configuration sensiblement rétractée pour maintenir les passages axiaux 64 dégagés.

Puis, les chiens d'ancrage 90 sont déployés sensiblement totalement pour assurer la fixation du mandrin dans la paroi 14 du conduit 12 en laissant les passages axiaux 64 dégagés. Ceci évite l'effet piston lors de cette fixation.

Ensuite, les garnitures d'étanchéité 214, situées de part et d'autre de la garniture de centrage 212 sont déployées radialement pour s'appliquer contre la paroi 14 du conduit, et contre la surface supérieure et la surface inférieure de la garniture de centrage 212. Ceci provoque d'une part, l'étanchéité entre le manchon 16 et le conduit 12, et d'autre part l'obturation des passages axiaux 64 de la garniture de centrage 212.

Dans les exemples représentés, l'ensemble de centrage de l'ensemble d'obturation de l'élément annulaire d'étanchéité sont adjacents longitudinalement, c'est-à-dire que la distance qui sépare longitudinalement l'ensemble de centrage de l'ensemble d'obturation est nulle ou réduite, par exemple inférieure au diamètre maximal de l'élément annulaire d'étanchéité déployé.

## Revendications

1. Mandrin (10 ; 210) destiné à être introduit dans un conduit (12) de circulation d'un fluide, du type comprenant :
- un corps (16, 22) présentant un axe longitudinal (X-X') ;
- un élément annulaire (18) d'étanchéité expansible radialement, comprenant un ensemble (46 ; 212) de centrage et un ensemble (44 ; 214) d'obturation de l'ensemble de centrage (46 ; 212), chaque ensemble (46, 44 ; 214, 212) étant déployable radialement par rapport au corps (16, 22) entre une configuration contractée et une configuration dilatée, l'élément annulaire d'étanchéité (18) définissant une surface périphérique continue (42) d'application sur le conduit (12) et une surface périphérique continue (43) d'application sur le corps (16, 22) lorsque l'ensemble de centrage (46 ; 212) et l'ensemble d'obturation (44 ; 214) occupent leurs configurations dilatées ;
- un élément d'ancrage (20) expansible radialement, espacé longitudinalement de l'ensemble annulaire d'étanchéité (18), l'élément d'ancrage (20) étant déplaçable entre un état rétracté et un état déployé dans lequel il délimite au moins un conduit axial (96) ;
- des moyens de séquençage (24) aptes à déployer radialement l'ensemble de centrage (46 ; 212) et l'élément d'ancrage (20) avant l'ensemble d'obturation (44 ; 214) ;
**caractérisé en ce que** l'ensemble de centrage (46 ; 212) présente une configuration au moins partiellement dilatée dans laquelle il définit au moins un passage axial (64) s'étendant à travers l'élément annulaire d'étanchéité (18), l'ensemble d'obturation (44 ; 214) obturant radialement le ou chaque passage axial (64) lors de son déploiement depuis sa configuration contractée vers sa configuration dilatée, l'élément d'ancrage (20) restant sensiblement dans son état déployé lors du déploiement radial de l'ensemble d'obturation (44 ; 214).

2. Mandrin (10 ; 210) selon la revendication 1, **caractérisé en ce que** le corps (16 ; 22) délimite une première surface (32) d'expansion radiale de l'ensemble de centrage (46 ; 212) et de l'ensemble d'obturation (44 ; 214), et une deuxième surface (94) d'expansion radiale de l'ensemble d'ancrage (20) mobile longitudinalement par rapport à la première surface d'expansion radiale (32) entre :
- une position éloignée dans laquelle l'ensemble de centrage (46 ; 212) et l'ensemble d'obturation (44 ; 214) occupent leur configuration contractée, l'élément d'ancrage (20) occupant son état rétracté ;
- une position intermédiaire de centrage, dans laquelle l'ensemble de centrage (46 ; 212) occupe sa configuration au moins partiellement dilatée, et l'ensemble d'ancrage (20) occupe un état au moins partiellement déployé, le ou chaque passage axial (64) et le ou chaque conduit axial (96) étant au moins partiellement dégagés, et
- une position rapprochée d'obturation, dans laquelle l'ensemble d'obturation (46 ; 214) occupe sa configuration dilatée pour obturer le ou chaque passage axial (64) défini par l'ensemble de centrage (46 ; 212).

3. Mandrin (10 ; 210) selon la revendication 2, **caractérisé en ce que** le corps (16 ; 22) comporte :
- un manchon (16) portant l'une de la première surface d'expansion radiale (32) et de la deuxième surface d'expansion radiale (94) ;
- un tube (22) monté coulissant dans le manchon (16) portant l'autre de la première surface d'expansion radiale (32) et de la deuxième surface d'expansion radiale (94) ;
l'ensemble de centrage (46), l'ensemble d'étanchéité (44) et l'élément d'ancrage (20) étant montés coulissants autour du corps (16 ; 22), sans interposition d'un organe de liaison frangible entre chacune de ces pièces.

4. Mandrin (10 ; 210) selon l'une quelconque des revendications 2 à 3, **caractérisé en ce que** la première surface radiale (32) définit un premier chemin de came (38, 40) pour l'expansion radiale de l'ensemble de centrage (46 ; 212) et un deuxième chemin de came (38) pour l'expansion radiale de l'ensemble d'obturation (44 ; 214), de profil distinct du premier chemin de came (38 ; 40), le premier chemin de came (38, 40) comprenant une marche (40) d'expansion radiale pour faire passer l'ensemble de centrage (46 ; 212) de sa configuration contractée vers sa configuration au moins partiellement dilatée, et une surface conique (38) pour provoquer l'expansion radiale de l'ensemble de centrage (42 ; 212) vers sa configuration dilatée.

5. Mandrin (10 ; 210) selon l'une quelconque des revendications 2 à 4, **caractérisé en ce que** la première surface d'expansion radiale (32), la deuxième surface d'expansion radiale (94), l'ensemble annulaire d'étanchéité (18), l'ensemble d'ancrage (20) et les moyens de séquençage (24) sont démontables de manière réversible par rapport au corps (16 ; 22) entre :
- une configuration fonctionnelle supérieure dans laquelle la première surface (32) d'expansion radiale et l'ensemble annulaire d'étanchéité (18) sont situés longitudinalement au-dessus de la deuxième surface (94) d'expansion radiale et de l'ensemble d'ancrage (20) ; et
- une configuration fonctionnelle inférieure dans laquelle la première surface (32) d'expansion radiale et l'ensemble annulaire d'étanchéité (18) sont situés longitudinalement au-dessous de la deuxième surface d'expansion radiale (94) et de l'ensemble d'ancrage (20).

6. Mandrin (10 ; 210) selon l'une quelconque des revendications 2 à 5, **caractérisé en ce que** les moyens de séquençage comprennent un premier organe (136) de sollicitation élastique de l'élément d'ancrage (20) vers son état rétracté, et un deuxième organe (138) de sollicitation élastique de l'ensemble de centrage (46 ; 212) et de l'ensemble d'obturation (44 ; 214) vers leur configuration contractée,
et **en ce que** le premier organe de sollicitation (136) et le deuxième organe de sollicitation (138) sont initialement précontraints et interposés en série entre la première surface d'expansion radiale (32) et la deuxième surface d'expansion radiale (94), le premier organe de sollicitation (136) présentant une raideur et/ou une précontrainte initiale différente de celle du deuxième organe de sollicitation (138), pour obtenir un déploiement séquentiel continu de l'ensemble de centrage (46 ; 212), de l'élément d'ancrage (20), puis de l'ensemble d'obturation (44 ; 214).

7. Mandrin (10 ; 210) selon l'une quelconque des revendications 2 à 6, **caractérisé en ce qu'**il comprend des moyens (26) de blocage du déplacement de la première surface d'expansion radiale (32) à l'écart de la deuxième surface d'expansion radiale (94), ces moyens de blocage (26) étant activables uniquement au-delà de la position intermédiaire de centrage.

8. Mandrin (10 ; 210) selon la revendication 7, **caractérisé en ce que** les moyens de blocage (26) comprennent :
- une première surface dentée (170) solidaire d'un premier organe (16) portant la première surface d'expansion radiale (32) ;
- une deuxième surface dentée (116) de pas P, solidaire d'un deuxième organe (22) portant la deuxième surface d'expansion radiale (94) ;
- au moins N bagues dentées (172A, 172B), N étant supérieur à 1, interposées entre la première surface dentée (170) et la deuxième surface dentée (116), les bagues (172A, 172B) présentant des dentures de pas décalés longitudinalement de P/N pour engager la première surface dentée (170) avec la deuxième surface dentée (116) par l'intermédiaire successivement et cycliquement de chacune des N bagues (172A, 172B) lors du déplacement de la première surface d'expansion radiale (32) vers la deuxième surface d'expansion radiale (94).

9. Mandrin (10 ; 210) selon l'une quelconque des revendications 2 à 8, **caractérisé en ce qu'**il comprend un support (120) de traction fixé sur le tube de manoeuvre (22) par l'intermédiaire d'un organe périphérique frangible (121), le support de traction (120) étant séparable du tube de manoeuvre (22) par poinçonnage de l'organe périphérique frangible (121) le long d'une périphérie du support de traction (120), et **en ce que** l'organe périphérique frangible (121) est une rondelle tarée d'épaisseur constante pour être rompue sous l'effet d'une force longitudinale de séparation prédéterminée entre le support de traction (120) et le tube de manoeuvre (22).

10. Mandrin (10) selon l'une quelconque des revendications précédentes, **caractérisé en ce que** l'ensemble de centrage (46) comprend une pluralité de blocs de centrage espacés latéralement les uns des autres autour de l'axe longitudinal (X-X') dans la configuration dilatée de l'ensemble de centrage (46), l'ensemble d'obturation (44) comprenant une pluralité de blocs d'obturation emboîtés de manière étanche entre les blocs de centrage (46) dans leur configuration dilatée, et **en ce que** l'élément d'ancrage (20) comprend une pluralité de chiens d'ancrage (90) répartis angulairement autour de l'axe longitudinal (X-X').

11. Mandrin (10) selon la revendication 10, **caractérisé en ce que** l'ensemble de centrage (46) et l'ensemble d'obturation (44) comprennent chacun des branches (70, 78) de sollicitation radiale de chaque bloc de centrage (46) et de chaque bloc d'obturation (44) vers l'axe longitudinal (X-X'), l'élément d'ancrage (20) comprenant des branches (92) de rappel des chiens (90) vers l'axe longitudinal (X-X').

12. Mandrin (10 ; 210) selon la revendication 11, **caractérisé en ce que** les branches (78) de sollicitation radiale des blocs de centrage (46) et/ou les branches de rappel (92) sont liées avec un jeu longitudinal dans une cage (80) montée coulissante longitudinalement autour du corps (16 ; 22).

13. Mandrin selon l'une quelconque des revendications précédente, **caractérisé en ce que**, dans la configuration contractée, l'ensemble annulaire (18) occupe un encombrement radial inférieur ou égal à l'encombrement radial maximal du corps (16, 22).

14. Procédé de mise en place d'un mandrin (10 ; 210) selon l'une quelconque des revendications précédentes dans un conduit (12) de circulation d'un fluide, **caractérisé en ce qu'**il comprend les étapes suivantes :
- insertion et descente du mandrin (10 ; 210) dans le conduit (12), l'ensemble de centrage (46 ; 212) et l'ensemble d'obturation (44 ; 214) occupant leurs configurations contractées, l'élément d'ancrage (20) occupant son état rétracté ; puis, lorsque le mandrin atteint une position souhaitée dans le conduit :
- déploiement radial de l'ensemble de centrage (46 ; 212) vers sa configuration au moins partiellement dilatée et de l'ensemble d'ancrage (20) vers son état déployé, pour appliquer au moins en partie l'élément d'ancrage (20) et l'ensemble de centrage (46 ; 212) contre une paroi intérieure (14) du conduit (12) et maintenir le corps (16, 22) à l'écart de la paroi intérieure (14), le ou chaque passage axial (64) et le ou chaque conduit axial (96) étant laissé au moins partiellement dégagé pour permettre le passage d'un fluide à travers le ou chaque passage axial (64) et à travers le ou chaque conduit axial (96); puis
- déplacement de l'ensemble d'obturation (44 ; 214) vers sa configuration dilatée pour obturer le ou chaque passage axial (64) et définir une surface périphérique (42) d'application de l'ensemble annulaire d'étanchéité (18) sur le conduit (12) et une surface périphérique (43) d'application de l'ensemble annulaire d'étanchéité (18) sur le corps (16 ; 22) continues sur au moins une périphérie autour de l'axe longitudinal (X-X'), l'élément d'ancrage (20) restant sensiblement dans son état déployé lors du déploiement radial de l'ensemble d'obturation (44 ; 214).

## Claims

1. Mandrel (10; 210) to be inserted into a liquid circulation pipe (12), of the type comprising:
- a body (16, 22) having a longitudinal axis (X-X');
- a radially expandable annular sealing element (18) comprising a centring arrangement (46; 212) and an arrangement (44; 214) for closing the centring arrangement (46; 212), it being possible to deploy each arrangement (46, 44; 214, 212) radially relative to the body (16, 22) between a contracted configuration and a dilated configuration, the annular sealing element (18) defining a continuous peripheral surface (42) for application against the pipe (12) and a continuous peripheral surface (43) for application against the body (16, 22) when the centring arrangement (46; 212) and the closure arrangement (44; 214) are in the dilated configurations thereof;
- a radially expandable anchoring element (20) which is at a longitudinal distance from the annular sealing arrangement (18), the anchoring element (20) being displaceable between a retracted state and a deployed state in which it delimits at least one axial pipe (96);
- sequencing means (24) capable of radially deploying the centring arrangement (46; 212) and the anchoring element (20) before the closure arrangement (44; 214);
**characterised in that** the centring arrangement (46; 212) has an at least partly dilated configuration in which it defines at least one axial passage (64) which extends through the annular sealing element (18), the closure arrangement (44; 214) radially closing the or each axial passage (64) as it is deployed from its contracted configuration to its dilated configuration, the anchoring element (20) basically remaining in its deployed state when the closure arrangement (44; 214) is radially deployed.

2. Mandrel (10; 210) according to claim 1, **characterised in that** the body (16; 22) delimits a first surface (32) for radially expanding the centring arrangement (46; 212) and the closure arrangement (44; 214), and a second surface (94) for radially expanding the anchoring arrangement (20) which is longitudinally displaceable relative to the first radial expansion surface (32) between:
- a remote position in which the centring arrangement (46; 212) and the closure arrangement (44; 214) are in the contracted configurations thereof, the anchoring element (20) being in the retracted state thereof;
- an intermediate centring position in which the centring arrangement (46; 212) is in the at least partly dilated configuration thereof and the anchoring arrangement (20) is in an at least partly deployed state, the or each axial passage (64) and the or each axial pipe (96) being unobstructed at least in part, and
- a close closure position in which the closure arrangement (46; 214) is in the dilated configuration thereof to close the or each axial passage (64) defined by the centring arrangement (46; 212).

3. Mandrel (10; 210) according to claim 2, **characterised in that** the body (16; 22) comprises:
- a sleeve (16) which supports one of the first radial expansion surface (32) and of the second radial expansion surface (94);
- a tube (22) which is slidingly mounted in the sleeve (16) and supports the other of the first radial expansion surface (32) and of the second radial expansion surface (94);
the centring arrangement (46), the sealing arrangement (44) and the anchoring element (20) being slidingly mounted around the body (16; 22) without a frangible connection member being arranged between each of these parts.

4. Mandrel (10; 210) according to either claim 2 or claim 3, **characterised in that** the first radial surface (32) defines a first cam path (38, 40) for the radial expansion of the centring arrangement (46; 212) and a second cam path (38) for the radial expansion of the closure arrangement (44; 214) having a profile which is distinct from that of the first cam path (38; 40), the first cam path (38, 40) comprising a radial expansion step (40) to cause the centring arrangement (46; 212) to pass from the contracted configuration thereof to the at least partly dilated configuration thereof, and a conical surface (38) to cause the centring arrangement (42; 212) to expand radially into the dilated configuration thereof.

5. Mandrel (10; 210) according to any one of claims 2 to 4, **characterised in that** the first radial expansion surface (32), the second radial expansion surface (94), the annular sealing arrangement (18), the anchoring arrangement (20) and the sequencing means (24) can be reversibly detached from the body (16; 22) to change the configuration between:
- an upper functional configuration in which the first radial expansion surface (32) and the annular sealing arrangement (18) are positioned longitudinally above the second radial expansion surface (94) and the anchoring arrangement (20); and
- a lower functional configuration in which the first radial expansion surface (32) and the annular sealing arrangement (18) are positioned longitudinally below the second radial expansion surface (94) and the anchoring arrangement (20).

6. Mandrel (10; 210) according to any one of claims 2 to 5, **characterised in that** the sequencing means comprise a first member (136) for resiliently urging the anchoring element (20) towards the retracted state thereof, and a second member (138) for resiliently urging the centring arrangement (46; 212) and the closure arrangement (44; 204) towards the contracted configurations thereof, and **in that** the first urging member (136) and the second urging member (138) are initially prestressed and arranged in series between the first radial expansion surface (32) and the second radial expansion surface (94), the first urging member (136) having a level of stiffness and/or initial prestress which is different from that of the second urging member (138) in order to enable the continuous sequential deployment of the centring arrangement (46; 212), the anchoring element (20), then the closure arrangement (44; 214).

7. Mandrel (10; 210) according to any one of claims 2 to 6, **characterised in that** it comprises means (26) for blocking the displacement of the first radial expansion surface (32) at a distance from the second radial expansion surface (94), these blocking means (26) only being able to be activated beyond the intermediate centring position.

8. Mandrel (10; 210) according to claim 7, **characterised in that** the blocking means (26) comprise:
- a first toothed surface (170) which is integral with a first member (16) supporting the first radial expansion surface (32);
- a second toothed surface (116) of pitch P which is integral with a second member (22) supporting the second radial expansion surface (94);
- at least N toothed rings (172A, 172B), N being greater than 1, arranged between the first toothed surface (170) and the second toothed surface (116), the rings (172A, 172B) having teeth, the pitch of which is offset longitudinally by P/N to engage the first toothed surface (170) with the second toothed surface (116) by successively and cyclically using each of the N rings (172A, 172B) as the first radial expansion surface (32) is displaced towards the second radial expansion surface (94).

9. Mandrel (10; 210) according to any one of claims 2 to 8, **characterised in that** it comprises a traction support (120) fixed on the manoeuvring tube (22) by means of a frangible peripheral member (121), the traction support (120) being detachable from the manoeuvring tube (22) by piercing the frangible peripheral member (121) along a periphery of the traction support (120), and **in that** the frangible peripheral member (121) is a springloaded washer of constant thickness to be broken under the effect of a predetermined longitudinal separation force between the traction support (120) and the manoeuvring tube (22).

10. Mandrel (10) according to any one of the preceding claims, **characterised in that** the centring arrangement (46) comprises a plurality of centring blocks at a lateral distance from one another about the longitudinal axis (X-X') in the dilated configuration of the centring arrangement (46), the closure arrangement (44) comprising a plurality of closure blocks fitted in a tight manner between the centring blocks (46) in the dilated configuration thereof, and **in that** the anchoring element (20) comprises a plurality of anchoring dogs (90) distributed angularly about the longitudinal axis (X-X').

11. Mandrel (10) according to claim 10, **characterised in that** the centring arrangement (46) and the closure arrangement (44) each comprise branches (70, 78) for radially urging each centring block (46) and each closure block (44) towards the longitudinal axis (X-X'), the anchoring element (20) comprising branches (92) for returning the dogs (90) towards the longitudinal axis (X-X').

12. Mandrel (10; 210) according to claim 11, **characterised in that** the branches (78) for radially urging the centring blocks (46) and/or the return branches (92) are associated with a longitudinal clearance in a cage (80) which is mounted so as to slide longitudinally around the body (16; 22).

13. Mandrel according to any one of the preceding claims, **characterised in that**, in the contracted configuration, the radial dimensions of the annular arrangement (18) are smaller than or equal to the maximum radial dimensions of the body (16, 22).

14. Method of positioning a mandrel (10; 210) according to any one of the preceding claims in a liquid circulation pipe (12), **characterised in that** it comprises the following steps:
- insertion into and lowering of the mandrel (10; 210) in the pipe (12), the centring arrangement (46; 212) and the closure arrangement (44; 214) being in the contracted configurations thereof, the anchoring element (20) being in the retracted state thereof; then, when the mandrel reaches a desired position in the pipe:
- radial deployment of the centring arrangement (46; 212) to the at least partly dilated configuration thereof, and of the anchoring arrangement (20) to the deployed state thereof, to apply at least in part the anchoring element (20) and the centring arrangement (46; 212) against an inner wall (14) of the pipe (12) and to hold the body (16, 22) at a distance from the inner wall (14), the or each axial passage (64) and the or each axial pipe (96) remaining unobstructed at least in part to allow a liquid to pass through the or each axial passage (64) and through the or each axial pipe (96); followed by
- displacement of the closure arrangement (44; 214) to the dilated configuration thereof to close the or each axial passage (64) and to define a peripheral surface (42) for applying the annular sealing arrangement (18) against the pipe (12) and a peripheral surface (43) for applying the annular sealing arrangement (18) against the body (16; 22), the surfaces being continuous over at least a periphery about the longitudinal axis (X-X'), and the anchoring element (20) basically remaining in the deployed state thereof when the closure arrangement (44; 214) is radially deployed.

## Patentansprüche

1. Dorn (10; 210), der vorgesehen ist, in eine Leitung (12) für die Zirkulation eines Fluids eingeführt zu werden, umfassend:
- einen Körper (16, 22), der eine Längsachse (X-X') aufweist;
- ein ringförmiges radial expansibles Dichtungselement (18), das eine Zentrieranordnung (46; 212) und eine Verschließanordnung (44; 214) der Zentrieranordnung (46; 212) umfasst, wobei jede Anordnung (46, 44; 214, 212) in Bezug auf den Körper (16, 22) radial von einer zusammengezogenen Konfiguration in eine ausgedehnten Konfiguration ausfahrbar ist, wobei das ringförmige Dichtungselement (18) eine durchgehende Umfangsfläche (42) zum Anlegen an die Leitung (12) und eine durchgehende Umfangsfläche (43) zum Anlegen an den Körper (16, 22) definiert, wenn die Zentrieranordnung (46; 212) und die Verschließanordnung (44; 214) ihre ausgedehnten Konfigurationen einnehmen;
- ein radial expansibles Ankerelement (20), das in Längsrichtung zu der ringförmigen Dichtungsanordnung (18) beabstandet ist, wobei das Ankerelement (20) zwischen einem zurückgezogenen Zustand und einem ausgefahrenen Zustand, in dem es mindestens einen axialen Kanal (96) begrenzt, bewegbar ist;
- Abfolgemittel (24), die geeignet sind, radial die Zentrieranordnung (46; 212) und das Ankerelement (20) vor der Verschließanordnung (44; 214) auszufahren;
**dadurch gekennzeichnet, dass** die Zentrieranordnung (46; 212) eine mindestens teilweise ausgedehnte Konfiguration aufweist,
in der sie mindestens einen axialen Durchgang (64) definiert, der sich durch das ringförmige Dichtungselement (18) erstreckt, wobei die Verschließanordnung (44; 214) radial den oder jeden axialen Durchgang (64) bei ihrem Ausfahren von ihrer zusammengezogenen Konfiguration in ihre ausgedehnte Konfiguration verschließt, wobei das Ankerelement (20) im Wesentlichen in seinem ausgefahrenen Zustand bei dem radialen Ausfahren der Verschließanordnung (44; 214) verbleibt.

2. Dorn (10; 210) nach Anspruch 1, **dadurch gekennzeichnet, dass** der Körper (16; 22) eine erste Fläche (32) zur radialen Expansion der Zentrieranordnung (46; 212) und der Verschließanordnung (44; 214) und eine zweite Fläche (94) zur radialen Expansion der Ankeranordnung (20) begrenzt, die in Längsrichtung in Bezug auf die erste Fläche (32) zur radialen Expansion beweglich ist, zwischen:
- einer entfernten Position, in der die Zentrieranordnung (46; 212) und die Verschließanordnung (44; 214) ihre zusammengezogene Position einnehmen, wobei das Ankerelement (20) seinen zurückgezogenen Zustand einnimmt;
- einer Zwischenposition der Zentrierung, in der die Zentrieranordnung (46; 212) ihren zumindest teilweise ausgedehnten Zustand einnimmt, wobei der oder jeder axiale Durchgang (64) und der oder jeder axiale Kanal (96) zumindest teilweise freigesetzt ist, und
- einer herangerückten Verschließposition, bei der die Verschließanordnung (46; 214) ihre ausgedehnte Konfiguration einnimmt, um den oder jeden axialen Durchgang (64), der von der Zentrieranordnung (46; 212) definiert wird, zu verschließen.

3. Dorn (10; 210) nach Anspruch 2, **dadurch gekennzeichnet, dass** der Körper (16; 22) umfasst:
- eine Hülse (16), die eine von der ersten Fläche (32) der radialen Expansion und der zweiten Fläche (94) der radialen Expansion trägt;
- ein Rohr (22), das gleitend in der Hülse (16) angeordnet ist und die andere von der ersten Fläche (32) der radialen Expansion und der zweiten Fläche (94) der radialen Expansion trägt;
wobei die Zentrieranordnung (46), die Dichtungsanordnung (44) und das Ankerelement (20) gleitend um den Körper (16; 22) ohne die Zwischenanordnung eines brechbaren Verbindungsorgans zwischen jedem dieser Teile angeordnet sind.

4. Dorn (10; 210) nach einem beliebigen der Ansprüche 2 bis 3, **dadurch gekennzeichnet, dass** die erste radiale Fläche (32) einen ersten Nockenpfad (38, 40) für die radiale Expansion der Zentrieranordnung (46; 212) und einem zweiten Nockenpfad (38) für die radiale Expansion der Verschließanordnung (44; 214) mit einem zu dem ersten Nockenpfad (38; 40) unterschiedlichen Profil definiert, wobei der erste Nockenpfad (38, 40) eine Stufe (40) der radialen Expansion, um die Zentrieranordnung (46; 212) von ihrer zusammengezogenen Konfiguration in die zumindest teilweise ausgedehnte Konfiguration zu bringen, und eine konische Fläche (38) umfasst, um die radiale Expansion der Zentrieranordnung (42; 212) in ihre ausgedehnte Konfiguration hervorzurufen.

5. Dorn (10; 210) nach einem beliebigen der Ansprüche 2 bis 4, **dadurch gekennzeichnet, dass** die erste Fläche der radialen Expansion (32), die zweite Fläche der radialen Expansion (94), die ringförmige Dichtungsanordnung (18), die Ankeranordnung (20) und die Abfolgemittel (24) in reversibler Weise in Bezug auf den Körper (16; 22) demontierbar sind, zwischen:
- einer oben liegenden Funktionskonfiguration, in der die erste Fläche (32) der radialen Expansion und die ringförmige Dichtungsanordnung (18) in Längsrichtung über der zweiten Fläche (94) der radialen Expansion und der Ankeranordnung (20) angeordnet sind; und
- einer unten liegenden Funktionskonfiguration, in der die erste Fläche (32) der radialen Expansion und die ringförmige Dichtungsanordnung (18) in Längsrichtung unter der zweiten Fläche (94) der radialen Expansion und der Ankeranordnung (20) liegen.

6. Dorn (10; 210) nach einem beliebigen der Ansprüche 2 bis 5, **dadurch gekennzeichnet, dass** die Abfolgemittel ein erstes Organ (136) der elastischen Belastung des Ankerelements (20) in seinen zurückgezogenen Zustand und ein zweites Organ (138) der elastischen Belastung der Zentrieranordnung (46; 212) und der Verschließanordnung (44; 214) in ihre zusammengezogene Konfiguration umfassen,
und dass das erste Organ (136) der Belastung und das zweite Organ (138) der Belastung anfänglich vorgespannt sind und in Reihe zwischen der ersten Fläche (32) der radialen Expansion und der zweiten Fläche (94) der radialen Expansion angeordnet sind, wobei das erste Organ (136) der Belastung eine Steifigkeit und/oder eine anfängliche Vorspannung unterschiedlich zu der des ersten Organs (138) der Belastung aufweist, um ein aufeinanderfolgendes kontinuierliches Ausfahren der Zentrieranordnung (46; 212), des Ankerelements (20), dann der Verschließanordnung (44; 214) zu erhalten.

7. Dorn (10; 210) nach einem beliebigen der Ansprüche 2 bis 6, **dadurch gekennzeichnet, dass** er Mittel (26) zum Blockieren der Verschiebung der ersten Fläche (32) der radialen Expansion fern von der zweiten Fläche (94) der radialen Expansion umfasst, wobei diese Mittel zum Blockieren (26) nur jenseits der Zwischenposition der Zentrierung aktivierbar sind.

8. Dorn (10; 210) nach Anspruch 7, **dadurch gekennzeichnet, dass** die Mittel zum Blockieren (26) umfassen:
- eine erste gezahnte Fläche (170), die mit einem ersten, die erste Fläche (32) der radialen Expansion tragenden Organ (16), verbunden ist;
- eine zweite gezahnte Fläche (116) mit Teilung P, die mit einem die zweite Fläche (94) der radialen Expansion tragenden Organ (22) verbunden ist;
- mindestens N gezahnte Ringe (172A, 172B), N größer als 1, die zwischen der ersten gezahnten Fläche (170) und der zweiten gezahnten Fläche (116) angeordnet sind, wobei die Ringe (172A, 172B) Verzahnungen mit in Längsrichtung um P/N versetzter Teilung aufweisen, um die erste gezahnte Fläche (170) mit der zweiten gezahnten Fläche (160) in aufeinanderfolgender Weise und zyklisch mittels jedem der N Ringe (172A, 172B) bei der Verschiebung der ersten Fläche (32) der radialen Expansion zu der zweiten Fläche (94) der radialen Expansion in Eingriff zu bringen.

9. Dorn (10; 210) nach einem beliebigen der Ansprüche 2 bis 8, **dadurch gekennzeichnet, dass** er einen Zugträger (120) umfasst, der an dem Handhabungsrohr (22) mittels eines brechbaren Umfangsorgans (121) befestigt ist, wobei der Zugträger (120) von dem Handhabungsrohr (22) durch Lochungen des brechbaren Umfangsorgans (121) längs eines Umfangs des Zugträgers (120) trennbar ist, und dass das brechbare Umfangsorgan (121) eine austarierte Scheibe mit konstanter Dicke ist, um unter der Wirkung einer vorbestimmten Längstrennkraft zwischen dem Zugträger (120) und dem Handhabungsrohr (22) zerbrochen zu werden.

10. Dorn (10; 210) nach einem beliebigen der vorhergehenden Ansprüche, **dadurch gekennzeichnet, dass** die Zentrieranordnung (46) eine Vielzahl von Zentrierblöcken umfasst, die lateral zueinander um die Längsachse (X-X') in der ausgedehnten Konfiguration der Zentrieranordnung (46) beabstandet sind, wobei die Verschließanordnung (44) eine Vielzahl von Verschließblöcken umfasst, die in dichter Weise zwischen die Zentrierblöcke (46) in ihrer ausgedehnten Konfiguration geschachtelt sind, und dass das Ankerelement (20) eine Vielzahl von Ankerspannelementen (90) umfasst, die winkelmäßig um die Längsachse (X-X') verteilt sind.

11. Dorn (10; 210) nach Anspruch 10, **dadurch gekennzeichnet, dass** die Zentrieranordnung (46) und die Verschließanordnung (44) jeweils Arme (70, 78) zur radialen Belastung jedes Zentrierblocks (46) und jedes Verschließblocks (44) in Richtung der Längsachse (X-X') umfassen, wobei das Ankerelement (20) Arme (92) zum Rückführen der Spannelemente (90) in Richtung der Längsachse (X-X') umfasst.

12. Dorn (10; 210) nach Anspruch 11, **dadurch gekennzeichnet, dass** die Arme (78) zur radialen Belastung der Zentrierblöcke (46) und/oder die Arme (92) zum Rückführen mit einem Längsspiel in einem Käfig (80) verbunden sind, der in Längsrichtung gleitend um den Körper (16; 22) herum angeordnet ist.

13. Dorn (10; 210) nach einem beliebigen der vorhergehenden Ansprüche, **dadurch gekennzeichnet, dass** in der zusammengezogenen Konfiguration die ringförmige Anordnung (18) einen radialen Platzbedarf kleiner oder gleich dem maximalen radialen Platzbedarf des Körpers (16, 22) einnimmt.

14. Verfahren zur Instellungbringung eines Dorns (10; 210) nach einem beliebigen der vorhergehenden Ansprüche in eine Leitung (12) zur Zirkulation eines Fluids, **dadurch gekennzeichnet, dass** es die folgenden Schritte umfasst:
- Einführen und Weiterbewegen des Dorns (10; 210) in die bzw. der Leitung (12), wobei die Zentrieranordnung (46; 212) und die Verschließanordnung (44; 214) ihre zusammengezogenen Konfigurationen einnehmen, wobei das Ankerelement (20) seinen zurückgezogenen Zustand einnimmt; dann, wenn der Dorn eine gewünschte Position in der Leitung erreicht:
- radiales Ausfahren der Zentrieranordnung (46; 212) in ihre zumindest teilweise ausgedehnte Konfiguration und der Ankeranordnung (20) in ihren ausgefahrenen Zustand, um das Ankerelement (20) und die Zentrieranordnung (46; 212) zumindest teilweise gegen die Innenwand (14) der Leitung (12) zu drücken und den Körper (16; 22) fern von der Innenwand (14) zu halten, wobei der oder jeder axiale Durchgang (64) und der oder jeder axiale Kanal (96) zumindest teilweise freigelassen wird, um den Durchgang eines Fluids durch den oder jeden axialen Durchgang (64) und durch den oder jeden axialen Kanal (96) zu ermöglichen; dann
- Bewegen der Verschließanordnung (44; 214) in ihre ausgedehnte Konfiguration, um den oder jeden axialen Durchgang (64) zu verschließen und eine Umfangsfläche (42) des Andrückens der ringförmigen Dichtungsanordnung (18) an die Leitung (12) und eine Umfangsfläche (43) des Andrückens der ringförmigen Dichtungsanordnung (18) an den Körper (16; 22) zu definieren, die über mindestens einen Umfang um die Längsachse (X-X') durchgehend sind, wobei das Ankerelement (20) im Wesentlichen in seinem ausgefahrenen Zustand bei dem radialen Ausfahren der Verschließanordnung (44; 214) verbleibt.
